(19) Europäisches Patentamt
European Patent Office
Office européen des brevets

(11) EP 2 477 009 A1

(12) **EUROPEAN PATENT APPLICATION**
published in accordance with Art. 153(4) EPC

(43) Date of publication:
**18.07.2012 Bulletin 2012/29**

(21) Application number: **10813557.5**

(22) Date of filing: **16.06.2010**

(51) Int Cl.:
***G01F 1/74*** *(2006.01)* ***G01F 3/10*** *(2006.01)*

(86) International application number:
**PCT/JP2010/060165**

(87) International publication number:
**WO 2011/027606 (10.03.2011 Gazette 2011/10)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.09.2009 JP 2009206039**

(71) Applicant: **Oval Corporation**
**Tokyo 161-8508 (JP)**

(72) Inventors:
- **KITAMI, Hirokazu**
  **Tokyo 161-8508 (JP)**
- **KAWAOTO, Hiraku**
  **Tokyo 161-8508 (JP)**

(74) Representative: **Grünecker, Kinkeldey, Stockmair & Schwanhäusser**
**Leopoldstrasse 4**
**80802 München (DE)**

# (54) POSITIVE DISPLACEMENT GAS-LIQUID TWO-PHASE FLOWMETER AND MULTIPHASE FLOW RATE MEASUREMENT SYSTEM

(57) Provided is a positive displacement gas-liquid two-phase flowmeter for, when measuring the respective flow rates of a gas-liquid two-phase flow comprising liquid and gas, accurately measuring the flow rates in a wide flow rate range by a compact and robust structure that is less susceptible to the flow pattern. A positive displacement gas-liquid two-phase flowmeter (10) measures the total gas-liquid flow rate ($Q_M$) of a gas-liquid two-phase flow comprising liquid and gas, and the ratio (gas void fraction (β)) of the gas flow rate to the total gas-liquid flow rate, and calculates the respective flow rates of the liquid and the gas on the basis of the total gas-liquid flow rate ($Q_M$) and gas void fraction (β). The positive displacement gas-liquid two-phase flowmeter (10) is provided with a positive displacement flow rate measurement chamber (16) for measuring the total gas-liquid flow rate ($Q_M$) and provided with a gas-liquid mixing chamber (14) for mixing the liquid and the gas in the gas-liquid two phase flow at a stage preceding the positive displacement flow rate measurement chamber (16).

FIG.1

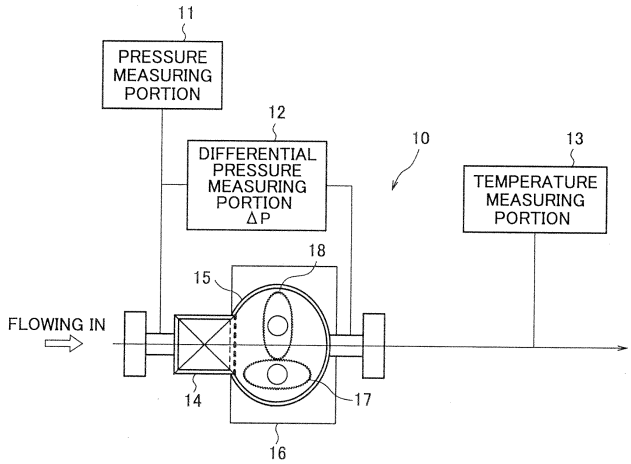


EP 2 477 009 A1

## Description

### TECHNICAL FIELD

The present invention relates to a positive displacement gas-liquid two-phase flowmeter and a multiphase flow rate measurement system, and more specifically to a positive displacement gas-liquid two-phase flowmeter capable of measuring a flow rate of each of a gas and a liquid of a gas-liquid two-phase flow including the liquid and the gas flowing in a pipe line and a multiphase flow rate measurement system that includes the flowmeter.

### BACKGROUND ART

The petroleum produced in under-sea oil fields, etc., forms an oil-water-gas three-phase flow that is an oil flow including water and a gas (hereinafter, referred to as "multiphase flow") . The petroleum is transported under a high pressure to a land without separating these phases from each other and, thereafter, undergoes a development well extraction process, and a separation and refinement process. The oil or the gas is transported to its destination after separation and refinement and the water is subjected to drainage treatment. At a step before the development-well extraction process, the flow is measured for each phase of the multiphase fluid when necessary for the management of the development wells and the management of the procedure from the extraction process to the shipping.

In the above, a method is known as a conventional flow measuring method for a multiphase flow, according to which the gas and the liquid are separated from each other and, thereafter, the flow rate of each of them is measured in the state where each of them is a single-phase flow. According to this, the gas in the multiphase flow is physically separated from the liquid and, when the liquid includes two liquid phases, a portion of the liquid is sampled, the ratio of each of the liquid phases is acquired, and the flow rate of each of the liquid phases is calculated. A common single-phase flowmeter is used to measure the flow rate of each of the gas and the liquid.

However, this method is able to achieve high precision while this method needs a large-size and expensive gas separating apparatus. Therefore, a problem arises that a large amount of equipment cost is necessary. Therefore, in order to eliminate the use of this gas separating apparatus, a gas-liquid flowmeter has been developed and commercialized as a product, that enables simultaneous measurement of the flow rate of each of a liquid and a gas measuring the multiphase flow as it is without separating the liquid and the gas from each other.

Many of the existing gas-liquid flowmeters generally measure a total gas-liquid flow $Q_M$ using a momentum flowmeter such as a Venturi meter and measure the ratio of the gas flow accounting for in the total gas-liquid flow (hereinafter, referred to as "gas void fraction $\beta$") using a $\gamma$ ray, an electric property, etc. However, the density of a gas and that of a liquid of a gas-liquid two-phase flow significantly differ from each other and, therefore, the gas and the liquid tend to separate from each other. Therefore, the difference in the speed between the gas and the liquid becomes significant and the flow pattern (see Figs. 16 described later) is drastically varied depending on the gas void fraction. Therefore, it is difficult for a conjecturing scheme employed by a momentum flowmeter, etc., to precisely measure the total gas-liquid flow $Q_M$. As to the measurement of the gas void fraction $\beta$ using a $\gamma$ ray, an electric property, etc.: the cost thereof is high and influences on the human body are worried about in the case where the $\gamma$ ray is used; and the measurement is easily influenced by salts and heavy metals included in the fluid in the case where an electric property is used.

As to the conventional gas-liquid flowmeter, for example, Patent Document 1 describes an apparatus for measuring the flow rate of a gas-liquid two-phase fluid or an oil-water-gas three-phase fluid using one or more momentum flowmeter (s) and one positive displacement (volume) flowmeter. Patent Document 2 describes a method of measuring the flow rate of a two-phase fluid (a gas and a liquid) using a turbine flowmeter. Patent Document 3 describes a method of measuring the flow rate of a three-phase fluid (a gas, a liquid, and another liquid) by a turbine flowmeter.

### PRIOR ART DOCUMENTS

#### Patent Documents

Patent Document 1: Japanese Patent Publication No. 2790260
Patent Document 2: Japanese Patent Publication No. 2866021
Patent Document 3: Japanese Patent Publication No. 3678618

## SUMMARY OF THE INVENTION

### PROBLEM TO BE SOLVED BY THE INVENTION

Fig. 15 is a schematic diagram of a multiphase flowmeter described in Patent Document 1 that measures two phases of a gas and a liquid. In Fig. 15, "101" denotes a pressure measuring portion, "102" denotes a differential pressure measuring portion, "103" denotes a temperature measuring portion, "104" denotes a positive displacement flowmeters, "105" denotes a rotator, and "106" denotes a momentum flowmeter. The multiphase flowmeter measures a rotation frequency ω of the rotator 105 using the positive displacement flowmeter 104 and, thereby, measures a total gas-liquid flow $Q_M$ and the momentum flowmeter 106 installed downstream further measures two differential pressures ΔP1 and ΔP2 using the differential pressure measuring portion 102. The pressure measuring portion 101 measures a pressure P using the positive displacement flowmeter 104. "ΔP0" in Fig. 15 is used to convert this pressure P to a pressure (P-ΔP0) at an inlet portion of the momentum flowmeter 106. The differential pressure measuring portions 102 are installed at three points and measure differential pressures ΔP0, ΔP1, and ΔP2. The total gas-liquid flow $Q_M$ is calculated according to the following equations.

$$\text{Total gas-liquid flow } Q_M = Q_L + Q_G \text{ ... Equation (1)}$$

$$\text{Differential pressure } \Delta P1 = f1(Q_L, Q_G, \rho_L) \text{ ... Equation (2)}$$

$$\text{Differential pressure } \Delta P2 = f2(Q_L, Q_G, \rho_L) \text{ ... Equation (3)}$$

where "$Q_L$" is the liquid flow, "$Q_G$" is the gas flow, and "$\rho_L$" is the density of the liquid.

The total gas-liquid flow $Q_M$, the liquid flow $Q_L$, and the gas flow $Q_G$ are acquired from these three Equations. However, when the density $\rho_L$ of the liquid is known, it is necessary to measure the differential pressure $\Delta P_1$. When the three phases of an oil, water, and a gas are measured, a moisture meter measuring a moisture content in the oil and water (such as an apparatus measuring the water concentration of the mixed liquids) is attached separately from the configuration depicted in Fig. 15.

In the above, the things raised as a first problem are "the rotator of the positive displacement flowmeter is stopped due to a foreign object bitten by the rotator", "a gap between the rotator and a main body inner chamber of the positive displacement flowmeter is narrow, therefore, the mesh is small of a filter net installed to prevent the biting, therefore, the size of the filter is significantly larger than that of the flowmeter to secure the necessary filtering area and, therefore, the installation cost is high", "cleaning of the net needs to be frequently conducted" and "the durability of the rotator is low". The positive displacement flowmeter measures the gas and the liquid confining them between the flowmeter main body and the rotator and, therefore, the gap between the main body and the rotator needs to be tiny (about 0.1 mm or smaller) according to the conventional techniques. It is said that the positive displacement flowmeter tends to cause an accident to occur that the rotator is stopped due to a foreign object included in the fluid being bitten between the main body and the rotator. Therefore, as above, installation of a filter is necessary at the previous stage of the flowmeter.

The conventional positive displacement flowmeter has a disadvantage that: driving and following of each of a pair of rotators are alternately changed; therefore, tooth faces of one rotator collide with those of the other; therefore, wearing of the tooth faces is advanced; and the durability of the rotators is low. A problem like this is able to be solved when the positive displacement flowmeter is replaced with an ultrasonic flowmeter or a turbine flowmeter. However, in this case, the precision of the measurement of the total gas-liquid flow is significantly degraded due to an influence of variation of the flow pattern of the gas and the liquid as depicted in Figs. 16 described below.

A second problem can be that the momentum flowmeter is used for measuring the differential pressure. Flow modes of a gas-liquid two-phase flow in a horizontal pipe will briefly be described. It is known that the gas-liquid two-phase flow takes various flow modes depending on the combination of flow speeds of the gas and the liquid. These flow modes (flow patterns) are depicted in Figs. 16. Fig. 16(A) depicts a stratified flow. Fig. 16(B) depicts a wavy flow. Fig. 16(C) depicts an annular flow. Fig. 16(D) depicts a bubble flow or a plug flow. Fig. 16(E) depicts a slug flow. Fig. 16 (F) depicts another annular flow that is different from the annular flow of Fig. 16(C). Fig. 16(G) depicts a bubble flow. Fig.

16(H) depicts an annular atomized flow.

When the momentum flowmeter is used for measuring the differential pressure, the densities of the gas and the liquid of the gas-liquid two-phase flow significantly differ from each other and, therefore, the gas and the liquid tend to separate from each other and the difference in the speed between the gas and the liquid becomes significant. As a result, the flow pattern of the two-phase flow is drastically varied as depicted in Figs. 16 depending on the gas void fraction. Therefore, no good measurement of the differential pressure is executable. Even when a mixer is used, the flow patterns (Figs. 16 (D) and (E)) for the liquid phase and the gas phase to alternately flow are unable to be improved. Therefore, a countermeasure is necessary such as limiting the range of the gas void fraction to a range thereof with which an excellent measurement property for the differential pressure is able to be acquired.

The positive displacement flowmeter 104 and the momentum flowmeter 106 are installed at a distance and, therefore, a time lag is generated between an output of the rotation frequency $\omega$ of the rotator 105 and an output of the differential pressure $\Delta P$ ($\Delta P0$, $\Delta P1$, and $\Delta P2$) of the gas-liquid two-phase fluid. Therefor, the momentum flowmeter 106 receives an influence of the flow pattern that is formed by the liquid phase, the gas phase, and the gas-liquid phase all varying with time and that is specific to the gas and the liquid and, in addition, the total gas-liquid flow $Q_M$ and the gas void fraction $\beta$ calculated based on the rotation frequency $\omega$ and the differential pressure $\Delta P$ are temporally unsynchronized with each other. Therefore, no measurement with high precision is enabled.

Figs. 17 are schematic diagrams of the multiphase flowmeters described in Patent Documents 2 and 3. Fig. 17(A) depicts the turbine gas-liquid two-phase flowmeter described in Patent Document 2. Fig. 17(B) depicts the turbine gas-liquid-liquid three-phase flowmeter described in Patent Document 3. In Figs. 17: "107" and "108" each denote a differential pressure measuring portion; "109" denotes a vane wheel; "110" denotes a mixer; and "111" denotes twin turbine vane wheels.

The structure described in Patent Document 2 that is depicted in Fig. 17 (A) and the structure described in Patent Document 3 that is depicted in Fig. 17 (B) are different from each other in that the structure depicted in Fig. 17 (A) is the structure of a common turbine flowmeter and includes the one turbine vane wheel 109 while the structure depicted in Fig. 17 (B) incorporates therein a mixer (the mixer 110) and employs the twin turbine vane wheels 111 (a pair of turbine vane wheels) The measurement of the gas-liquid two-phase flow is expressed as below denoting the gas void fraction as "$\beta$", the differential pressure as "$\Delta PM$", and the rotation frequency of the turbine vane wheel as "$\omega$".

$$\text{Total gas-liquid flow } Q_M=f(\omega, \beta) \text{ ... Equation (4)}$$

$$\text{Differential pressure } \Delta PM=f(Q_M, \beta) \text{ ... Equation (5)}$$

The total gas-liquid flow $Q_M$ and the gas void fraction $\beta$ are able to be acquired from these two equations. The flows $Q_L$ and $Q_G$ of the liquid and the gas are able to be acquired as blow.

$$\text{Liquid flow } Q_L=Q_M*(1-\beta)\text{, Gas flow } Q_G=Q_M*\beta \text{ ... Equation (6)}$$

The measurement of the gas-liquid-liquid three-phase flow is achieved as follows based on Fig. 17 (B) : a phase shift $\theta$ between those before and after the twin turbine vane wheels (a combination of different inflow angles of the vanes) is detected; thereby, the mass flow is acquired denoting the mass flow as "MM" and according to MM=f ($\theta$) ; the average density of the two phases of the two liquids is acquired from the total gas-liquid flow $Q_M$ and the gas void fraction $\beta$ that are acquired as above, on the premise that the densities are known in advance of the three phases of the gas and the two liquids; the ratio is calculated of the two phases of the two liquids; and each flow of the two phases of the two liquids are acquired from the flow $Q_L$ of the liquids acquired as above.

These schemes are characterized in that these schemes each employ a compact structure while problems described as follows arise from these schemes. The rotation frequency $\omega$ of the turbine vane wheel is directly related to the flow pattern and, therefore, the drastic variation as it is of the flow pattern specific to the gas-liquid flow as depicted in Figs. 16 degrades the precision of the measurement of the total gas-liquid flow $Q_M$ (Equation (4)). The flow pattern of the gas-liquid two-phase flow is determined mainly by the gas void fraction $\beta$ and, therefore, the range of the total gas-liquid flow that is measurable is limited to a range thereof within which the rotation frequency $\omega$ is able to maintain a specific relationship with the variation of the gas void fraction $\beta$.

The approach of acquiring the flow rate of each of the two phases of the two liquids by the twin-turbine vane wheel scheme is established on the premise that the difference in the phase angle between the pair of turbine vane wheels (the shift of the phase angle in the rotation direction thereof between the vane wheels disposed before and after each other in the flowing direction of the fluid) is in proportion to the mass flow of the fluid. However, in the above drastic variation of the flow pattern, the premise does not always hold due to the relationship between the rotation frequency $\omega$ and the gas void fraction $\beta$.

An equation to calculate a ratio $\alpha$ of the two phases of the two liquids by acquiring the average density $\rho_M$ of the two phases of the two liquids (the densities of the liquids are denoted by $\rho_{L1}$ and $\rho_{L2}$) is generally expressed as below.

$$\alpha=(\rho_M-\rho_{L2})/(\rho_{L1}-\rho_{L2}) \quad ... \text{ Equation (7)}$$

Denoting an error in the average density $\rho_M$ by "$\gamma\rho_M/\rho_M$", an error in the ratio $\alpha$ is expressed as below.

$$\gamma\alpha/\alpha=1/(\rho_{L1}-\rho_{L2}) *\gamma\rho_M/\rho_M \quad ... \text{ Equation (8)}$$

According to the above equation, the error in the latter (the ratio $\alpha$) is expanded to a value that is the ratio $\alpha$ multiplied by 1/ (the difference between the densities of the two liquids) for the error in the former (the average density $\rho_M$). For example, for water and the crude oil, the difference therebetween is about 0.15 g/ml and, therefore, the degree of the expansion is about seven-fold. Therefore, high precision is required in the measurement of the average density while, taking into consideration the above drastic variation of the flow pattern, it is considered that it is difficult for the twin-turbine vane wheel scheme to realize the high precision.

The present invention was conceived in view of the above circumstances and the object thereof is to provide a positive displacement gas-liquid two-phase flowmeter to measure a wide range of flow with high precision that tends to receive no influence of any flow pattern in measuring a flow rate of each of a gas and a liquid of a gas-liquid two-phase flow including the liquid and the gas and whose structure is compact and robust, and a multiphase flow rate measurement system that includes the flowmeter.

MEANS FOR SOLVING THE PROBLEM

To solve the above problems, a first technical means is a positive displacement gas-liquid two-phase flowmeter that measures the total gas-liquid flow of a gas-liquid two-phase flow including a liquid and a gas, and the ratio of a gas flow to the total gas-liquid flow and that calculates the flow rate of each of the liquid and the gas based on the total gas-liquid flow and the ratio of the gas flow, that includes a positive displacement floe measuring chamber that receives no influence of any flow pattern specific to the gas-liquid flow in a total gas-liquid flow measuring chamber measuring the total gas-liquid flow, and that is characterized in that a gas-liquid mixing chamber that mixes the liquid and the gas in the gas-liquid two-phase flow with each other is disposed at the previous stage of the positive displacement flow measuring chamber.

A second technical means is the positive displacement gas-liquid two-phase flowmeter as defined in the first technical means, wherein the positive displacement flow measuring chamber and the gas-liquid mixing chamber are unified.

A third technical means is the positive displacement gas-liquid two-phase flowmeter as defined in the first or second technical means, wherein a rotation frequency of a rotator disposed in the positive displacement flow measuring chamber and a differential pressure between a previous stage of the gas-liquid mixing chamber and a subsequent stage of the positive displacement flow measuring chamber are simultaneously detected and, based on the rotation frequency and the differential pressure detected, the total gas-liquid flow and the ratio of the gas flow are calculated.

A fourth technical means is the positive displacement gas-liquid two-phase flowmeter as defined in the third technical means: as to the total gas-liquid flow, a calculation equation of the total gas-liquid flow is derived from the rotation ratio property of the rotation frequency of the rotator to the ratio of the gas flow; as to the ratio of the gas flow, a calculation equation of the ratio of the gas flow is derived from a differential pressure magnification property of a first differential pressure acquired when only the liquid flows and a second differential pressure acquired when the gas flow is gradually increased with the liquid flow remaining constant; and the total gas-liquid flow and the ratio of the gas flow are acquired from these two calculation equations.

A fifth technical means is the positive displacement gas-liquid two-phase flowmeter as defined in any one of the first to fourth technical means, wherein the gas-liquid mixing chamber is detachable from the positive displacement flow measuring chamber.

A sixth technical means is the positive displacement gas-liquid two-phase flowmeter as defined in any one of the first to fifth technical means, wherein the rotator disposed in the positive displacement flow measuring chamber includes non-circular gears and the non-circular gears each have a tooth profile curve: that has the number of teeth of 4n+2 (where "n" is a natural number); whose major axis has a tooth space on each of its ends; whose minor axis has a tooth tip on each of its ends; whose intermeshing tooth faces are each formed by a curve with which the teeth smoothly intermesh even when the intermeshing points somewhat do not mutually coincide with each other (for example, an involute curve); and whose non-intermeshing tooth faces are each formed by a curve: that is easy to process at a cutter pressure angle of 0°; and whose tooth profile including the intermesh tooth face and the non-intermeshing tooth face has a thickness not significantly varying from the tooth tip to the tooth root to secure the tooth profile strength (for example, a cycloid curve).

A seventh technical means is the positive displacement gas-liquid two-phase flowmeter as defined in the sixth technical means, wherein based on the tooth profile curve, the non-circular gears have a shape that includes tooth spaces on the ends of the major axis, whose recesses each between two tooth profiles sandwiching the tooth space are filled, whose teeth including tooth tips on the ends of the minor axis are cut off, and whose number of teeth is 4n-2e

An eighth technical means is the positive displacement gas-liquid two-phase flowmeter as defined in the sixth or seventh technical means, as to "n" that indicates the number of teeth of each of the non-circular gears, the value of n is three or four.

A ninth technical means is the positive displacement gas-liquid two-phase flowmeter as defined in any one of the sixth to eighth technical means, wherein a gap wider than a predetermined length is disposed between an inner wall of the positive displacement flow measuring chamber and the rotator.

A tenth technical means is characterized in that, the positive displacement gas-liquid two-phase flowmeter as defined in any one of the first to ninth technical means is expanded to a multiphase flow measuring system that acquires a total gas-liquid-liquid flow, a ratio of a gas flow to the total gas-liquid-liquid flow, and a liquid-liquid mixing ratio of a gas-liquid-liquid three-phase flow and that calculates a flow rate of each of three of a gas, a liquid, and another liquid by: installing the positive displacement gas-liquid two-phase flowmeter in a pipe line of a three-phase flow including the gas and the two kinds of liquid; and disposing a liquid-liquid two-phase flowmeter that detects two liquid-phase components constituting the liquid and that measures a ratio of each of the liquid-phase components, at a subsequent stage or a previous stage of the positive displacement gas-liquid two-phase flowmeter.

## EFFECT OF THE INVENTION

According to the present invention, the scheme is employed according to which the positive displacement flowmeter is employed for measuring the total gas-liquid flow and the differential pressure is detected between the pressures before and after the flowmeter for measuring the gas void fraction. Thereby, the rotation frequency of the rotator and the differential pressure are able to be simultaneously measured. Therefore, when the flow is measured of each of a liquid and a gas of a gas-liquid two-phase flow including the liquid and the gas, the positive displacement flowmeter is able to measure a wide range of flow with high precision, employing a compact and robust structure that tends to receive no influence of the flow pattern.

## BRIEF DESCRIPTION OF DRAWINGS

[Fig. 1] Fig. 1 is a diagram of an exemplary configuration of a positive displacement gas-liquid two-phase flowmeter according to an embodiment of the present invention.
[Fig. 2] Fig. 2 is a graph of a rotation ratio property ε according to the present invention.
[Fig. 3] Fig. 3 is a graph of a differential pressure magnification property according to the present invention.
[Fig. 4] Fig. 4 is a diagram of an exemplary configuration of a multiphase flow rate measurement system that includes the flowmeter depicted in Fig. 1.
[Fig. 5] Figs. 5 are diagrams of examples of a tooth profile that is used in the positive displacement flowmeter.
[Fig. 6] Fig. 6 is a diagram for explaining an undercut due to a tool, that occurs around a tooth root.
[Fig. 7] Fig. 7 is a graph for explaining the state where the rotation frequency ratio property according to the present invention is varied depending on presence or absence of a gas-liquid mixing chamber.
[Fig. 8] Fig. 8 is a graph for explaining the state where the differential pressure magnification property according to the present invention is varied depending on presence or absence of the gas-liquid mixing chamber.

[Fig. 9] Fig. 9 is a graph of an experimental result.
[Fig. 10] Fig. 10 is a graph of an experimental result.
[Fig. 11] Fig. 11 is a graph of an experimental result.
[Fig. 12] Fig. 12 is a graph of an experimental result.
[Fig. 13] Fig. 13 is a graph of an experimental result.
[Fig. 14] Fig. 14 is a graph of an experimental result.
[Fig. 15] Fig. 15 is a schematic diagram of a multiphase flowmeter described in Patent Document 1 that measures two phases of a gas and a liquid.
[Fig. 16] Figs. 16 are diagrams of flow patterns.
[Fig. 17] Figs. 17 are schematic diagrams of multiphase flowmeters described in Patent Documents 2 and 3.

MODES FOR CARRYING OUT THE INVENTION

A preferred embodiment according to a positive displacement gas-liquid two-phase flowmeter and a multiphase flow rate measurement system including the flowmeter of the present invention will be described with reference to the accompanying drawings. In the drawings, the same components are given the same reference numerals or symbols and will not again be described.

Fig. 1 is a diagram of an exemplary configuration of a positive displacement gas-liquid two-phase flowmeter according to an embodiment of the present invention. In Fig. 1, "10" denotes a positive displacement gas-liquid two-phase flowmeter (hereinafter, simply referred to as "flowmeter"). The flowmeter 10 includes a pressure measuring portion 11 that measures a pressure in the vicinity of an inlet of a gas-liquid mixing chamber 14, a differential pressure measuring portion 12 that measures a differential pressure between a pressure at a previous stage of the gas-liquid mixing chamber 14 and that at a subsequent stage of a flow measuring chamber 16, a temperature measuring portion 13 that measures the temperature of a gas-liquid two-phase flow, the gas-liquid mixing chamber 14 that evenly mixes a liquid and a gas with each other of the gas-liquid two-phase flow, a main body inner chamber 15 that is formed in the flow measuring chamber 16, the flow measuring chamber 16 that includes a positive displacement flowmeter, and a pair of rotators that are disposed in the main body inner chamber 15, and gaps 18 are formed between the main body inner chamber 15 and the rotators 17.

As described with reference to Fig. 16, the density of a gas and that of a liquid of a gas-liquid flow flowing in a pipe line significantly differ from each other and, therefore, the gas and the liquid tend to separate from each other. In addition, a large difference is generated in the flow speed between the gas and the liquid and, therefore, flow variation is drastic and various flow patterns are formed. According to the present invention, the positive displacement flowmeter is used as the flow measuring chamber 16, that tends to receive no influence of the variation of the flow pattern and the following two items are executed to further improve the precision of the measurement of the flow.

Firstly, the present invention employs the positive displacement flowmeter for the measurement of the total gas-liquid flow, that tends to receive no influence of the flow pattern specific to the gas-liquid flow. However, to further improve the precision of the measurement, the gas-liquid mixing chamber 14 is disposed at the previous stage of the flow measuring chamber 16, and the gas and the liquid are evenly mixed with each other and, thereby, the rotation efficiency of the rotators 17 is improved, that measure the volume. For example, a static mixer is used as the gas-liquid mixing chamber 14, and a static mixer is used as the static mixer, that evenly mixes the gas and the liquid and that has a profile drag coefficient suitable for improving a differential pressure magnification property (Fig. 3 described later) of the gas-liquid two-phase flowmeter 10.

The gas-liquid mixing chamber 14 includes a plurality of mixing elements that are assembled in an arbitrary direction against the direction of the flow rate of the fluid, aiming at evenly mixing the gas and the liquid by: mixing a gas phase and a liquid phase in the gas-liquid flow; fragmenting bubbles grown large and mixing the fragmented bubbles with the liquid phase; etc. The gas-liquid mixing chamber 14 may be detachable from the flow measuring chamber 16. Fig. 1 depicts the case where the flow measuring chamber 16 and the gas-liquid mixing chamber 14 are formed in an integrated structure. However, the gas-liquid mixing chamber 14 may be established as a separate component and be connected to the flow measuring chamber 16 through a flange, etc. When the gas-liquid mixing chamber 14 its established as the separate component, preferably, the flow measuring chamber 16 and the gas-liquid mixing chamber 14 are disposed as close to each other as possible to simultaneously detect the rotation frequency $\omega$ of the rotators 17, and the differential pressure $\Delta P$ in the pressure between the previous stage of the gas-liquid mixing chamber 14 and the subsequent stage of the flow measuring chamber 16.

By employing the integrated structure, the rotation frequency $\omega$ of the rotators 17, and the differential pressure $\Delta P$ in the pressure between the previous stage of the gas-liquid mixing chamber 14 and the subsequent stage of the flow measuring chamber 16 are able to be simultaneously detected. Based on the rotation frequency $\omega$ and the differential pressure $\Delta P$, the total gas-liquid flow $Q_M$ and the gas volume rate (the gas void fraction $\beta$) that is the ratio of the gas flow to the total gas-liquid flow $Q_M$ are able to be measured with high precision. Therefore, when the flow is measured of each of a liquid and a gas of a multiphase flow including the gas and the liquid, the embodiment is able to measure the flow with high precision for a wide range of flow, employing a structure that tends to receive no influence of the flow pattern and that is compact and robust.

Secondly, a correction equation is introduced for the measurement of the total gas-liquid flow $Q_M$. When the total gas-liquid flow $Q_M$ is measured, the rotation frequency $\omega$ of the rotators 17 is reduced against the total gas-liquid flow $Q_M$ as the gas void fraction $\beta$ becomes larger (that is, the measurement of the total gas-liquid flow $Q_M$ shows a reducing trend) and, therefore, this property of the rotation frequency $\omega$ against the gas void fraction $\beta$ is referred to as "rotation ratio property $\varepsilon$" and

$$\varepsilon = f(\beta) \quad \text{... Equation (9)}$$

is experimentally acquired in advance. The total gas-liquid flow $Q_M$ is expressed as below.

$$Q_M = Mf * \omega / \varepsilon \quad \text{... Equation (10)}$$

Equation (10) corresponds to Equation "a" of the present invention. In the above, "Mf" is a liquid-phase volume [1/rev.] per one rotation of the rotator acquired when a single liquid phase is handled.

Fig. 2 is a graph of the rotation ratio property $\varepsilon$ according to the present invention. In Fig. 2, the rotation ratio $\varepsilon$ is represented on the axis of ordinate and the gas void fraction $\beta$ is represented on the axis of abscissa. The specification of the experiments will later be described. From this approximation equation, for example, $\varepsilon=1.012e^{-0.0562(1-\beta)}$ is acquired, where "e" is the natural logarithm.

As above, according to the positive displacement flowmeter, the flow is able to be measured with high precision regardless of the drastic variation of the flow pattern specific to the gas and the liquid. However, the strength is low of the tooth profile of the rotators that measures the volume. Therefore, problems arise that the tooth profile is broken when the flow rate of the gas-liquid flow abruptly varies and that the durability thereof is low. To solve these problems, the present invention employs rigid non-circular gears depicted in Fig. 5 (B) described later as the rotators 17. The rotator shafts are adapted to take a twin-support structure using one rotator shaft that is fixed and the other rotator shaft that is a support structure. As to bearing structures, sleeves are fixed on the shaft side through thrust plates. The bearings are press-fitted in each rotor and the running clearance and the thrust looseness are secured that are necessary when the rotators rotate. Thereby, smooth rotation is enabled. As to the material, SUS is employed for the rotator shafts and sintered hard alloy is employed for the bearings and, thereby, the durability thereof is improved.

The non-circular gears have an excellent sealing property with the main body inner chamber. Therefore, the gaps between the main body inner chamber and the rotators are able to be expanded several times as large as that of the conventional positive displacement flowmeter and, therefore, the size of the mesh of the net in the filter is able to be taken large. Therefore, impurities included in a fluid adhere to the net and cleaning to remove the impurities does not need to be conducted so often.

An approach will be described of acquiring the flow rate of each of the gas and the liquid from the total gas-liquid flow $Q_M$ and the gas void fraction $\beta$. As to the differential pressure $\Delta P$ that is generated between the previous stage of the gas-liquid mixing chamber 14 and the subsequent stage of the flow measuring chamber 16, a first differential pressure is denoted by "$\Delta P_L$" that is acquired when only the liquid flows (for a liquid single-phase flow) and a second differential pressure is denoted by "$\Delta P_M$" that is acquired when a gas flow is added to the liquid flow with the liquid flow maintained to be constant and with the gas gradually increased (the gas void fraction $\beta$ is increased). The differential pressure magnification of the differential pressures $\Delta P_M$ and $\Delta P_L$ is expressed as below.

$$\Delta P_M / \Delta P_L = (1-\beta)^{-Z} \quad \text{... Equation (11)}$$

In the above, "Z" is referred to as "differential pressure magnification exponent" and is experimentally acquired in advance.

Fig. 3 is a graph of the differential pressure magnification property according to the present invention. In Fig. 3, the differential pressure magnification is represented on the axis of ordinate and a liquid void fraction (1-$\beta$) is represented on the axis of abscissa. The specification of the experiments will later be described. According to this approximation equation, for example, the differential pressure magnification exponent Z is acquired as 0.8762 in $\Delta P_M/\Delta P_L= (1-\beta)^{-Z}$.

Denoting the density of the liquid by $\rho_L$, the differential pressure $\Delta P_L$ is expressed as below.

$$\Delta P_L = C * 1/2 * \rho_L \{(Q_M(1-\beta)/A\}^2 \quad \text{... Equation (12)}$$

Therefore, substituting Equation (11),

$$\Delta P_M = C * 1/2 * \rho_L * (1-\beta)^{2-Z} * (Q_M/A)^2 \quad \text{... Equation (13)}$$

is acquired. Equation (13) corresponds to Equation "b" of the present invention. In the above, "C" denotes a profile drag coefficient acquired by totaling those of the gas-liquid mixing chamber 14 and the flow measuring chamber 16 and "A" denotes an inlet cross-sectional area of the gas-liquid mixing chamber 14.

The total gas-liquid flow $Q_M$ and the gas void fraction β are able to be acquired from Equations (10) and (13). Against the drastic variation of the flow pattern specific to the gas-liquid flow, the flowmeter 10 employs the integrated structure and, therefore, the two measurements of the differential pressure $\Delta P_M$ in the pressure between the previous stage of the gas-liquid mixing chamber 14 and the subsequent stage of the flow measuring chamber 16, and the rotation frequency ω of the rotators 17 are able to be simultaneously measured. Therefore, the precision of the measurement of the total gas-liquid flow $Q_M$ and the gas void fraction β is able to be improved without receiving any influence of the flow pattern. The flows $Q_L$ and $Q_G$ respectively of the liquid and the gas are calculated as below.

$$Q_L = Q_M * (1-\beta),\ Q_G = Q_M * \beta \quad \text{... Equation (14)}$$

Fig. 4 is a diagram of an exemplary configuration of a multiphase flow rate measurement system that includes the flowmeter depicted in Fig. 1. In Fig. 4, "20" denotes a liquid-liquid two-phase flowmeter. This liquid-liquid two-phase flowmeter 20 is disposed at the subsequent stage or the previous stage of the flowmeter 10, detects two liquid-phase components constituting the liquid, and measures the component ratio (percentage) of each of the liquid-phase components. The liquid-liquid two-phase flowmeter 20 includes a differential pressure generating plate 21 that is attached to a pipe line and that generates a differential pressure, a liquid-phase extracting portion 22 that extracts the liquid-phase component (mixed liquid) from the gas-liquid two-phase flow, a liquid flow adjusting valve 23 that adjusts the flow rate of the mixed liquid extracted, a homogenizer 24 that homogenizes the mixed liquid output from the liquid flow adjusting valve 23 and, thereby, makes the density of the mixed liquid even, and a Coriolis meter 25 that is a known Coriolis mass flowmeter. The liquid-liquid two-phase flowmeter 20 is a known technique that is disclosed in, for example, Japanese Patent Publication No. 4137153 and, therefore, will not be described in detail.

As above, according to the present invention, the form may be established of the gas-liquid-liquid three-phase flow rate measurement system by connecting the liquid-liquid two-phase flowmeter 20 to the subsequent stage or the previous stage of the flowmeter 10 that measures a gas-liquid two-phase flow. As to the liquid-liquid two-phase flowmeter 20, for example, as depicted in Fig. 4, the measurement of the moisture content is enabled by installing an assembly including the liquid-phase extracting portion 22 and the Coriolis meter 25 on the bypass side from the main pipe. Therefore, measurement of a three-phase flow of a gas, a liquid, and a liquid (for examples, a gas, water, and an oil) is enabled.

According to the positive displacement gas-liquid two-phase flowmeter according to the present invention, a flow is able to be measured for a wide range of flow with high precision using a compact and inexpensive structure. More specifically, the positive displacement gas-liquid two-phase flowmeter employs the scheme according to which: the positive displacement flowmeter is employed for the measurement of the total gas-liquid flow $Q_M$, that in theory tends to receive no influence of the flow pattern; and an approach is employed of detecting the momentum of the fluid (the differential pressure between the pressures before and after the flowmeter) for the measurement of the gas void fraction β, that is not influenced by heavy metals and salts included in the fluid to be measured and that is inexpensive. For the measurement of the oil-water-gas three-phase flow such as that from an oil field, the positive displacement gas-liquid two-phase flowmeter is able to execute the measurement in combination with a liquid-liquid two-phase flowmeter capable of measuring the moisture content of the oily water, for example, the flowmeter depicted in Fig. 4 (Japanese Patent Publication No. 4137153).

When the measurement of the gas-liquid two-phase flow is executed, the total gas-liquid flow $Q_M$ and the gas void fraction β need to be acquired. In the case of the technique described in Patent Document 1 (Japanese Patent Publication No. 2790260), the total gas-liquid flow $Q_M$ and the gas void fraction β are calculated based on the outputs of the rotation frequency ω of the one rotator 105 from the positive displacement flowmeter 104 and the two momentums (the differential pressures ΔP1 and ΔP2) from the momentum flowmeter 1 06 disposed in series as depicted in Fig. 15 described above. In contrast, in the case of the measurement of the gas-liquid two-phase flow according to the present invention, the total gas-liquid flow $Q_M$ and the gas void fraction β are calculated based on the output of the rotation frequency ω of the one rotator 17 from the flow measuring chamber (the positive displacement flowmeter) 16 and the output of the one momentum (the differential pressure ΔP in the pressure between the previous stage of the gas-liquid mixing chamber 14 and the subsequent stage of the flow measuring chamber 16) as depicted in Fig. 1. Therefore, no momentum flowmeter is separately needed and the structure of the flowmeter is able to be simplified.

In Fig. 15 described above, the momentum flowmeter 106 installed away from the positive displacement flowmeter 104 receives the influence of the flow pattern specific to the gas and the liquid as depicted in Figs. 16(D) and (E) described above due to the variation with time of the liquid phase, the gas phase, and the gas-liquid phase. Therefore, the momentum flowmeter 106 is not able to measure the differential pressures ΔP1 and ΔP2 with high precision. In addition, the positive displacement flowmeter 104 and the momentum flowmeter 106 are disposed with a distance therebetween and, therefore, a time lag is generated between the output of the rotation frequency ω of the rotator 105 and the output of the differential pressures ΔP1 and ΔP2 of the gas-liquid two-phase fluid. As a result, the total gas-liquid flow $Q_M$ and the gas void fraction β calculated based on these are also temporally unsynchronized with each other and, therefore, are not measured with high precision. In contrast, in the case of the positive displacement gas-liquid two-phase flowmeter according to the present invention, this flowmeter employs the integrated structure and, therefore, the two items are able to be simultaneously measured and the measurement is enabled with high precision without receiving any influence of the flow pattern.

Figs. 5 are diagrams of examples of a tooth profile that is used in the positive displacement flowmeter. Fig. 5 (A) depicts a tooth profile of the conventional positive displacement flowmeter depicted in Fig. 14 and Fig. 5(B) depicts a tooth profile of the positive displacement flowmeter of the present invention depicted in Fig. 1 (see Japanese Patent Publication No. 382765). As depicted in Fig. 5(A), the conventional positive displacement flowmeter 104 depicted in Fig. 15 uses elliptic gears according to the conventional technique as the rotator 105. The tooth profile according to the conventional technique includes teeth that are increased by reducing the size of the tooth module to avoid interference such as undercutting of the tooth profile in the major axis portions.

In contrast, the rotators 17 disposed in the flow measuring chamber (the positive displacement flowmeter) 16 of the present invention depicted in Fig. 1 are non-circular gears and, as depicted in Fig. 5(B), the gears each have a tooth profile curve: that has the number of teeth of 4n+2 (where "n" is a natural number); whose major axis has a tooth space on each of its ends; whose minor axis has a tooth tip on each of its ends; whose intermeshing tooth faces are each formed by a curve with which the teeth smoothly intermesh even when the intermeshing points do not mutually coincide with each other (for example, an involute curve); and whose non-intermeshing tooth faces are each formed by a curve: that is easy to process at a cutter pressure angle of 0°; and whose tooth profile including the intermeshing tooth face and the non-intermeshing tooth face has a thickness not significantly varying from the tooth tip to the tooth root to secure the tooth profile strength (for example, a cycloid curve). Based on the above tooth profile curve, the non-circular gears may each have a shape that includes the tooth spaces on the ends of the major axis, whose recesses each between two tooth profiles sandwiching the tooth space are filled, whose teeth including tooth tips on the ends of the minor axis are cut off, and whose number of teeth is 4n-2. As to the rotator 17, as depicted in Fig. 5 (B), one tooth 171 in each of short diameter portions may be caused to be absent and a large tooth 174 may be formed that intermeshes with the portion of the absent tooth and that is formed by filling the space between two teeth 172 and 173 in each of long diameter portion.

The tip side of the rotator 17 is able to significantly enlarged by forming the large teeth 174. The shape of the gap 18 between the main body inner chamber 15 and the rotator 17 is varied from a line of the conventional tooth profile to a plane and, therefore, the sealing property is significantly improved. In other words, even when the gap 18 between the main body inner chamber 15 and the rotator 17 is widened, the simon of the measurement of the flow is able to be maintained. By using this tooth profile, the gap 18 between the main body inner chamber 15 and the rotator 17 is able to be widened exceeding a predetermined length (for example, 0.1 mm). When the positive cement flowmeter is used for the measurement of crude oil of an oil field, etc., a filter is generally installed at the previous stage of the flowmeter to prevent stoppage of the rotation of the rotator due to biting sludge included in the crude oil. In this case, the mesh of the net of the filter needs to be smaller than the gap 18. Conventionally, the size of the filter is used, that is significantly larger than that of the flowmeter, to secure the necessary filtering area. However, by setting the gap 18 to be wide as above, the mesh of the net is able to be enlarged and a merit is generated that the size of the filter becomes substantially same as that of the flowmeter.

The non-circular gear depicted in Fig. 5(B) is disclosed in the above Japanese Patent Publication No. 3827655 and the tooth profile module of the gear is able to be enlarged and the number of the teeth thereof is able to be reduced. Because no significant variation of the intermeshing pressure angle is present, setting of the cutter pressure angle is easily executed for the intermeshing tooth faces and the number of teeth is able to be reduced without forming any overhanging portion. The specific number of its teeth is expressed as 4n+2 (where "n" is a natural number) or 4n-2 as above and, preferably, the value of n suitable for the purpose of reducing the number of teeth is three or four as described below. Hereinafter, the tooth profile of the non-circular gear is referred to as "R4 tooth profile".

The minimal value of the number of teeth to process the intermeshing tooth face of the non-circular gear according to the present invention into one smooth curve is practically 14 (n=3, 4n+2) or 10 (n=3, 4n-2). The reason for this will be described below.

As depicted in Figs. 6 (A) and (B), for the number of teeth with n that is n=3 or fewer, an undercut occurs around the tooth root due to a tool and, when this undercut portion intermeshes with a portion around a tooth tip of a counterpart gear, the counterpart tooth tip portion enters the undercut portion and, thereby, smooth rotations are lost. On the other hand, the above number of teeth with n that is n=3 generates no undercut. Therefore, the minimal number of teeth necessary for the pair of gears to smoothly rotate is 14 or 10 and the minimal value of n actually applicable is three. This value (n=3) is the least satisfying value to generate no undercut. However, this is a value that is able to be said to be a critical value with which it is expected that a slight undercut occurs due to an error in attaching the tool. However, as to the strength of the tooth profile, the tooth profile with the highest strength is able to be acquired with this value.

When the number of teeth is set to be 18 (n=4, 4n+2) or 14 (n=4, 4n-2), that is, the number of teeth with n that is n=4, no undercut occurs and, therefore, the precision of the measurement is not degraded and substantially sufficient strength of the tooth profile is able to be acquited. On the other hand, the tooth profile becomes smaller as the number of teeth is increased and, when the number of teeth is set to be 66, this is the number of teeth of the conventional gear (Fig. 5(A)) and n in this case is 16. Therefore, it is considered that n is set to be in a range of $3 \leq n < 26$. However, the non-circular gear according to the present invention aims at employing a gear that has a significant strength of its tooth profile relative to the lengths of the long and the short diameters of the gear and, therefore, more preferably, n is n=4.

The positive displacement gas-liquid two-phase flowmeter of the present invention is a flowmeter aiming at measuring the oil-water-gas three-phase flow of an oil field. Therefore, for this flowmeter, non-circular gears each having a strong tooth profile are demanded to cope with: an impulsive force against the gears due to the fierce impulsive pressure (water hammer) generated by opening and closing of a valve, etc.; or entrance into the measuring chamber of fine solids included in the fluid to be measured. In this case, slight undercuts may occur with n that is n=3 described above and their influence on the precision of the measurement is marginal even though the intermeshing of the gears is somewhat degraded. Therefore, n that is n=3 is in the range for practical use under the condition that a robust tooth profile is necessary. Based on the above, as to the value of n that satisfies the measurement condition, preferably, three or four is the value.

The conventional tooth profile depicted in Fig. 5 (A) and the R4 tooth profile depicted in Fig. 5(B) will be described relatively comparing these two profiles with each other. When the pipe diameter is set to be two inches, the number of teeth of the R4 tooth profile is set to be 14 by employing n that is n=4 based on 4n-2 and the number of teeth of the conventional gear is 66. As to the tooth profile strength, the bending strength of the R4 tooth profile was five times as high as that of the conventional tooth profile as a calculative result and the R4 tooth profile was 10 times as strong as or further stronger than the conventional tooth profile against the impulsive force as a result of an inter-comparison experiment. As to the measurement of the volume, the volume of the fluid is measured by sending out by the rotation of the rotator the fluid that is confined between the main body inner chamber and the rotator. During this, the driving and the following of each of the pair of rotors are alternately changed and, therefore, bending stresses repeatedly act on the teeth of the rotator. In addition, as depicted in Fig. 16 described above, in the gas-liquid flow, the flow pattern is variously varied depending on the flows of the gas and the liquid and their mixing ratio. Therefore, the above repeated stresses significantly vary. The pipe line to transport the oil-water-gas three-phase flow from an oil field, etc., has the impulsive force acting on the rotator due to the occurrence of the water hammer caused by the stoppage of an opening-closing valve.

Therefore, compared to the measurement of a single-phase flow that includes only a liquid or a gas, strength of the tooth profile of the rotator is demanded for the measurement of the gas-liquid two-phase flow. According to the present invention, the strength is increased and the durability is significantly improved by employing the R4 profiles. In addition, the R4 tooth profile has the excellent sealing property with the main body inner chamber and, therefore, the gap between the rotator and the main body is able to be widened. As above, the measurement of the volume is executed by confining a fluid in a crescent-shaped volume formed between the main body inner chamber and the rotator and continuously sending out the fluid. In this case, when the gaps on the ends of the crescent-shaped volume are wide, the fluid leaks and, therefore, no excellent precision of the measurement is acquired. The gap in this case is the gap between the major axis portion of the rotator and the main body inner chamber.

Referring back to Fig. 5(B), as to the R4 tooth profile, the teeth in the minor axis portions are caused to be absent and the two teeth in each of the major axis portions are formed in one and, therefore, the gap is able to be shaped from a line to a plane and the sealing property is significantly improved. Therefore, the gap adjusted to be at least about 0.1 mm or narrower for the conventional tooth profile is able to be widened to a value that is several times as wide as this conventional value. According to the present invention, the sealing works in a plane and, thereby, a synergy effect is generated that a portion of a myriad of bubbles having different sizes in the gas-liquid flow invades the gap and temporarily blocks the flow. More specifically, the gap was able to be widened to about 0.3 to 0.5 mm. This applies to the case of water and the air and, therefore, it is estimated that the gap is able to be further widened for a combination of a highly viscous liquid and a gas such as the crude oil.

Thereby, according to the present invention, the mesh is able to be made course of the net of the filter that must be installed upstream the positive displacement flowmeter and the filtering area of the net is able to be expanded. Therefore, the volume of the filter is able to be reduced. Thereby, the cost is reduced and the net needs no frequent cleaning for its clogging that conventionally occurs due to mud-like foreign objects and, therefore, the maintainability is able to be improved.

Fig. 7 is a graph for explaining the state where the rotation ratio property $\varepsilon$ according to the present invention is varied depending on presence or absence of the gas-liquid mixing chamber. In Fig. 7, the axis of ordinate represents the rotation ratio and the axis of abscissa represents the gas void fraction $\beta$. This graph represents the rotation ratio $\varepsilon$ that is $\varepsilon=f(\beta)$ described for Equation (9) as above and shows how the property is varied depending on the presence and the absence of the gas-liquid mixing chamber 14 depicted in Fig. 1. It can be seen that, by installing the gas-liquid mixing chamber 14, the rotation of the R4 tooth profile tends to be flat against an increase of the gas void fraction $\beta$ (that is, a trend of suppressing the rotation) and is gradually stabilized. The positive displacement flowmeter 16 has the structure that receives in theory no influence of the flow pattern. However, it was confirmed that, by installing the gas-liquid mixing chamber 14 at the previous stage, the precision of the measurement of the gas-liquid flow was able to be improved.

Fig. 8 is a graph for explaining the state where the differential pressure magnification property according to the present invention is varied depending on presence or absence of the gas-liquid mixing chamber. The opening diameter of the positive displacement flowmeter 16 is two inches and the liquid flow is 6 $m^3$/h and is constant. In Fig. 8, the axis of ordinate represents the differential pressure magnification and the axis of abscissa represents the liquid void fraction $(1 - \beta)$. It can be seen that, by installing the gas-liquid mixing chamber 14 at the previous stage of the positive displacement flowmeter 16, the variation of the R4 tooth profile is suppressed against the liquid void fraction $(1 - \beta)$ that indicates the ratio of the liquid volume that accounts for in the gas-liquid volume.

Effects of the present invention will be described based on the results of the experiments.

1. Specification of the Positive-Displacement Gas-Liquid

Two-Phase Flow Meter (Fig. 1)

- Opening diameter: Two inches
- Rotator: Major axis diameter × length=75.038 mm×84.865 mm
- R4 tooth profile: Module: 3.1, The number of teeth: 18, The gap between the rotator and the main body inner chamber: 0.3 to 0.5 mm
- Bearing structure: Twin-support structure, a sliding bearing, Inner diameter: 14 mm
- Profile drag coefficient against a fluid in the gas-liquid mixing chamber and the flow measuring chamber: 31.4
- FS flow of the flowmeter: 20 $m^3$/h

2. Scope of Test of Gas-Liquid Two-Phase Flow

The FS flow of the flowmeter was 20 $m^3$/h. The upper limit of the flow acquired by totaling the test flow of each of water and the air was set to be 20 $m^3$/h and each of test flows was set such that the gas void fraction thereof was 0 to 97%. The lower limit of the reference flowmeter for water was 0.6 $m^3$/h and the upper limit of the pump for water was 14 $m^3$/h.

- Fluid used in the test: Water and the air
- Test flows: Water 0.6 to 14 $m^3$/h, the air 0 to 18 $m^3$/h
- Gas void fraction $\beta$ : 0 to 97%
- Pressure: 0.1 to 0.3 MPaA, Temperature: room temperature
- Rotation ratio property: $\varepsilon$, Differential pressure magnification: $\Delta P_M/\Delta P_L$

In this case, the total gas-liquid flow $Q_M$ is calculated as $Q_M=Mf/\varepsilon * \omega$. "$\varepsilon=f(\beta)$ "was experimentally acquired in advance. However, $\varepsilon$ is acquired to be $\varepsilon=1.012e^{-0.0562(1-\beta)}$ from the approximation equation of Fig. 2 above. "e" is the natural logarithm. The exponent "Z" in "$\Delta P_M/\Delta P_L=(1-\beta)^{-z}$" is able to be acquired to be Z=0.8762 from Fig. 3 above.

3. Evaluation of Test Result

In the test, a reference flowmeter for measuring a liquid is attached to a pipe holding water flowing therein and a reference flowmeter for measuring a gas is attached to a pipe holding the air flowing therein and, thereby, a reference flow of each of the water and the air is set. The total reference flow of the water and the air, and the reference gas void fraction (the ratio of air flow to the total flow of the water and the air) are acquired. The water and the air are caused to join each other downstream the pipes and, thereafter, the positive displacement gas-liquid two-phase flowmeter of the present invention is installed. Measured values of the gas void fraction, the total flow of the water and the air, the water flow, and the air flow acquired from the positive displacement gas-liquid two-phase flowmeter, and the reference values are compared with each other and are evaluated.

·• Measurement of Gas Void Fraction β

Fig. 9 depicts a comparison of the reference gas void fraction $\beta_0$ and the measured gas void fraction $\beta_1$, and the absolute error (a value acquired by subtracting the reference gas void fraction $\beta_0$ from the measured gas void fraction $\beta_1$: that is represented in %). The "absolute error %" becomes about "±6%" when the reference gas void fraction $\beta_0$ is equal to or lower than 0.2 and becomes about "-4 to 2%" when the reference gas void fraction $\beta_0$ is equal to or higher the 0.2 and equal to or lower than 0.97. Therefore, excellent precision of the measurement is shown in a wider gas void fraction range compared to that of the common gas-liquid two-phase flowmeter that is commercially available.

· Measurement of Total Flow of Water and Air, Water Flow, and Air Flow

As to the total gas-liquid flow, Fig. 10 depicts a comparison of the reference total gas-liquid flow $Q_{M0}$ and the measured total gas-liquid flow $Q_{M1}$ ($m^3$/h), and a relative error (%)of the measured total gas-liquid flow $Q_{M1}$ to the reference total gas-liquid flow $Q_{M0}$. As to the water flow and the air flow, Fig. 11 depicts the water flow $Q_L$ and Fig. 12 depicts the air flow $Q_G$ in the same manner as that of the above total gas-liquid flow. As to these items, excellent precision of the measurement is acquired compared to the precision thereof of the common gas-liquid two-phase flowmeter that is commercially available.

In Fig. 10, in the measurement of the total flow of the water and the air, the relative error (%) is about "-2 to 4%" and an excellent result is shown. As to each flow of the water flow depicted in Fig. 11 and the air flow depicted in Fig. 12, the relative error (%) is about "+10%" and it is able to be said that this relative error indicates substantially same precision of the measurement compared to that of the conventional multiphase flowmeter. However, the measurement range is 1:10 or higher (about 1:3 for the conventional multiphase flowmeter) and the range is able to be taken wider. In a range spanning from the FS flow (20 $m^3$/h) to about 1/3 to 1/4 thereof (for the water: 5 $m^3$/h in Fig. 11, for the air: 7 $m^3$/h in Fig. 12), about "±5%" is able to be secured. Therefore, the positive displacement gas-liquid two-phase flowmeter is able to be realized that is the object of the present invention, whose precision of measurement is excellent for a wide range of flow, and that is inexpensive and compact.

4. Measurement of Gas-Liquid-Liquid Three Phase Flow

For the gas-liquid-liquid three-phase flow, the flowmeter is used in combination with the Coriolis flowmeter that is installed in a bypass pipe depicted in Fig. 4. However, the precision of the measurement (the difference between a measured moisture content α1 and a reference moisture content α0) of the reference moisture content (in this case, water and fuel oil "A") acquired by using this scheme is about "±1%" as depicted in Fig. 13. It is considered that the precision of the measurement of the total flow of the two liquids in the gas-liquid-liquid three-phase flow is substantially same as the precision of the measurement of the water described above and, therefore, assuming that the precision is, for example, "±5%", the precision is able to be estimated as about ±6% that is acquired by adding the precision of the measurement "±1%" of the moisture content (of the two liquids) to the above "+5%" .

5. Measurement Ranges for Gas-Liquid Two-Phase Flow and Gas-Liquid-Liquid Three-Phase Flow

The ranges tested in Figs. 9 to 13 give a graph as depicted in Fig. 14. In Fig. 14, the axis of ordinate represents the liquid flow ($m^3$/h) and the axis of abscissa represents the gas void fraction β. The range is wider compared to that of the conventional multiphase liquid-liquid flowmeter. The liquid flow is set to be 0.6 to 18 $m^3$/h and the gas void fraction β is set to be 0 to 0.97 (maximum). According to Fig. 14, it can be read that the maximal value of the liquid flow is 18 $m^4$/h. In this case, denoting the liquid flow by $Q_L$ and the gas flow by $Q_G$, the gas void fraction β is $\beta=Q_G/(Q_L+Q_G)$. The upper limit (the maximal flow) of $Q_L+Q_G$ was set to be 20 $m^3$/h and the tests were conducted for this range.

Explanations of Letters or Numerals

10...positive displacement gas-liquid two-phase flowmeter, 11...pressure measuring portion, 12...differential pressure measuring portion, 13...temperature measuring portion, 14...gas-liquid mixing chamber, 15...main body inner chamber, 16...flow measuring chamber, 17...rotator, 18...gap, 20...liquid-liquid two-phase flowmeter, 21...differential pressure generating plate, 22...liquid phase extracting portion, 23...liquid flow adjusting valve, 24...homogenizer, and 25...Coriolis meter

## Claims

1. A positive displacement gas-liquid two-phase flowmeter that measures a total gas-liquid flow of a gas-liquid two-phase flow including a liquid and a gas, and a ratio of a gas flow to the total gas-liquid flow and that calculates a flow rate of each of the liquid and the gas based on the total gas-liquid flow and the ratio of the gas flow, comprising a positive displacement flow measuring chamber that measures the total gas-liquid flow, wherein
a gas-liquid mixing chamber that mixes the liquid and the gas in the gas-liquid two-phase flow with each other is disposed at a previous stage of the positive displacement flow measuring chamber.

2. The positive displacement gas-liquid two-phase flowmeter as defined in claim 1, wherein
the positive displacement flow measuring chamber and the gas-liquid mixing chamber are unified.

3. The positive displacement gas-liquid two-phase flowmeter as defined in claim 1 or 2, wherein
a rotation frequency of a rotator disposed in the positive displacement flow measuring chamber and a differential pressure between a previous stage of the gas-liquid mixing chamber and a subsequent stage of the positive displacement flow measuring chamber are simultaneously detected and, based on the rotation frequency and the differential pressure detected, the total gas-liquid flow and the ratio of the gas flow are calculated.

4. The positive displacement gas-liquid two-phase flowmeter as defined in claim 3, wherein
based on $\varepsilon$=f ($\beta$) that expresses a rotation ratio property "$\varepsilon$" of the rotation frequency "$\omega$" of the rotator to the ratio "$\beta$" of the gas flow, the total gas liquid flow "$Q_M$" is expressed as
$Q_M$=Mf *$\omega$/f (where, "Mf" is a liquid-phase volume per one rotation of the rotator for a liquid-phase alone) ...Equation a;
when a differential pressure magnification property ($\Delta P_M/\Delta P_L$) between a first differential pressure $\Delta P_L$ acquired when only the liquid flows and a second differential pressure $\Delta P_M$ acquired when a flow rate of the gas is gradually increased while maintaining the flow rate of the liquid to be constant is expressed as
$\Delta P_M/\Delta P_L=(1 - \beta)^{-z}$ ("Z" is a differential pressure magnification exponent experimentally acquired in advance); and the first differential pressure $\Delta P_L$ is expressed as $\Delta P_L$=C *1/2 *$\rho_L\{(Q_M(1-\beta)/A\}^2$ (were, "C" is a profile drag coefficient acquired by totaling those of the gas-liquid mixing chamber and the positive displacement flow measuring chamber, "$\rho_L$" is a density of the liquid, and "A" is an inlet cross-sectional area of the gas-liquid mixing chamber), the second differential pressure $\Delta P_M$ is derived as

$$\Delta P_M=C *1/2 *\rho_L *(1-\beta)^{2-Z} *(Q_M/A)^2 \text{...Equation b}$$

and the total gas-liquid flow $Q_M$, the ratio $\beta$ of the gas flow to the total gas-liquid flow $Q_M$, the gas flow $Q_G$, and the liquid flow $Q_L$ are acquired from Equations a and b.

5. The positive displacement gas-liquid two-phase flowmeter as defined in any one of claims 1 to 4, wherein
the gas-liquid mixing chamber is detachable from the positive displacement flow measuring chamber.

6. The positive displacement gas-liquid two-phase flowmeter as defined in any one of claims 1 to 5, wherein
the rotator disposed in the positive displacement flow measuring chamber comprises non-circular gears, and wherein the non-circular gears have a tooth profile curve that has the number of teeth of 4n+2 ("n" is a natural number); whose major axis has a tooth space on each of its ends; whose minor axis has a tooth tip on each of its ends; whose intermeshing tooth faces are each formed by an involute curve; and whose non-intermeshing tooth faces are each formed by a cycloid curve.

7. The positive displacement gas-liquid two-phase flowmeter as defined in claim 6, wherein
based on the tooth profile curve, the non-circular gears have a shape that includes tooth spaces on the ends of the major axis, whose recesses each between two tooth profiles sandwiching the tooth space are filled, whose teeth including tooth tips on the ends of the minor axis are cut off, and whose number of teeth is 4n-2.

**8.** The positive displacement gas-liquid two-phase flowmeter as defined in claim 6 or 7, wherein a value of "n" indicating number of teeth of each of the non-circular gears is three or four.

**9.** The positive displacement gas-liquid two-phase flowmeter as defined in any one of claims 6 to 8, wherein a gap wider than a predetermined length is disposed between an inner wall of the positive displacement flow measuring chamber and the rotator.

**10.** A multiphase flow rate measurement system that acquires a total gas-liquid-liquid, flow, a ratio of a gas flow to the total gas-liquid-liquid flow, and a liquid-liquid mixing ratio of a gas-liquid-liquid three-phase flow and calculates a flow rate of each of three of a gas, a liquid, and another liquid by
installing the positive displacement gas-liquid two-phase flowmeter as defined in any one of claims 1 to 9 in the gas-liquid-liquid three-phase flow including the gas and the two kinds of liquid; and
disposing a liquid-liquid two-phase flowmeter that detects two liquid-phase components constituting the liquid and that measures ratios of the liquid-phase components, at a subsequent stage or a previous stage of the positive displacement gas-liquid two-phase flowmeters.

FIG.1

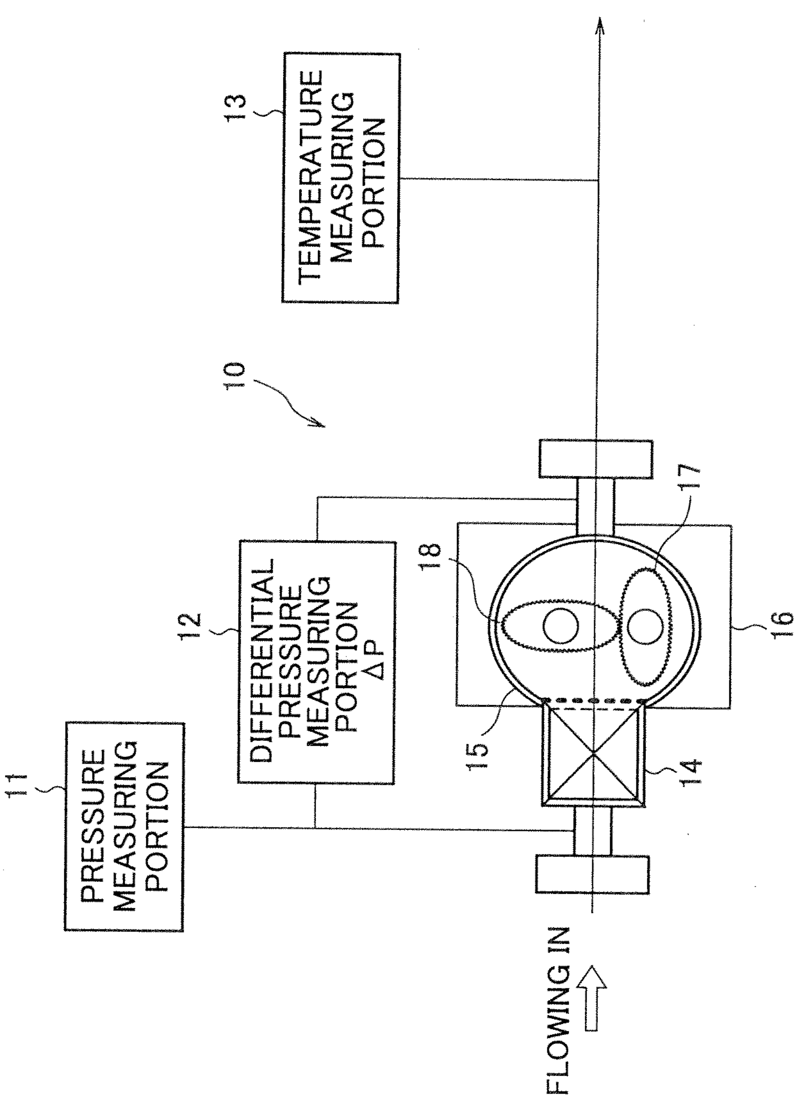
11
PRESSURE MEASURING PORTION
12
DIFFERENTIAL PRESSURE MEASURING PORTION ΔP
13
TEMPERATURE MEASURING PORTION
10
18
17
15
14
16
FLOWING IN

FIG.2

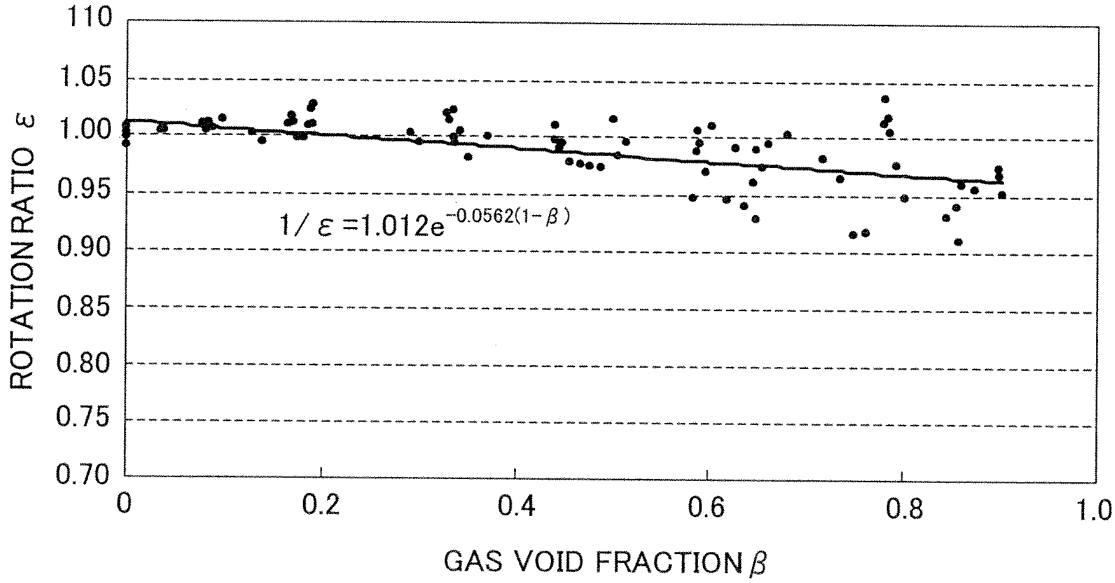
110
1.05
1.00
0.95
0.90
0.85
0.80
0.75
0.70
ROTATION RATIO ε
$1/\varepsilon = 1.012e^{-0.0562(1-\beta)}$
0
0.2
0.4
0.6
0.8
1.0
GAS VOID FRACTION β

FIG.3

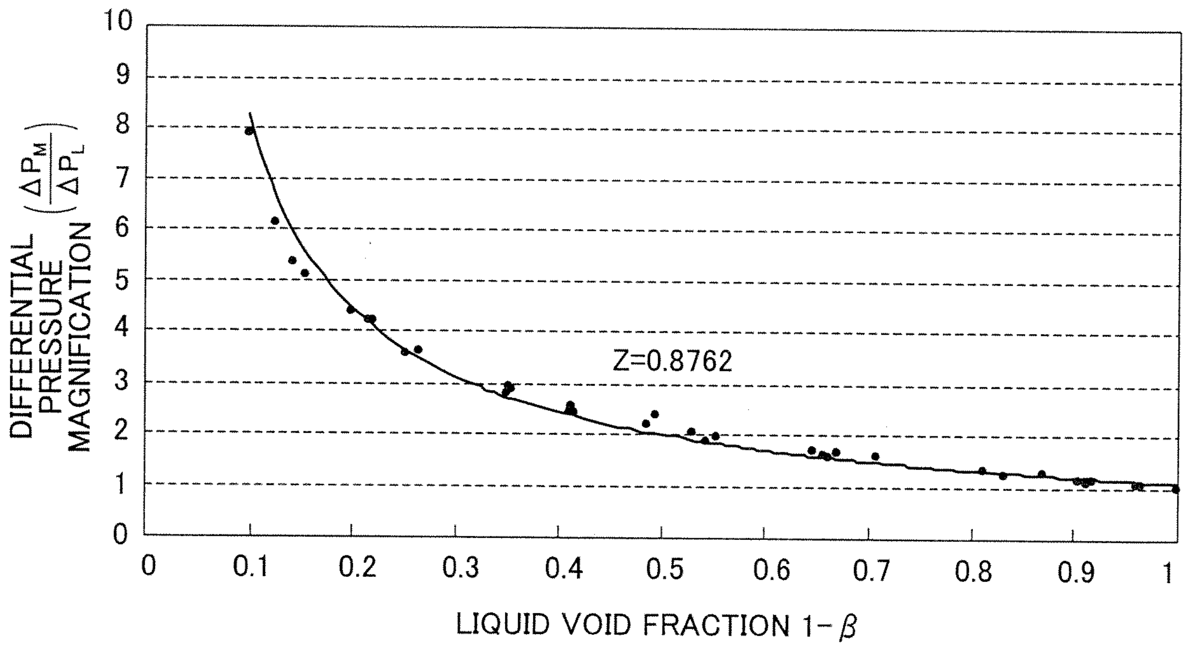
10
9
8
7
6
5
4
3
2
1
0
DIFFERENTIAL PRESSURE MAGNIFICATION $\left(\frac{\Delta P_M}{\Delta P_L}\right)$
Z=0.8762
0
0.1
0.2
0.3
0.4
0.5
0.6
0.7
0.8
0.9
1
LIQUID VOID FRACTION 1−β

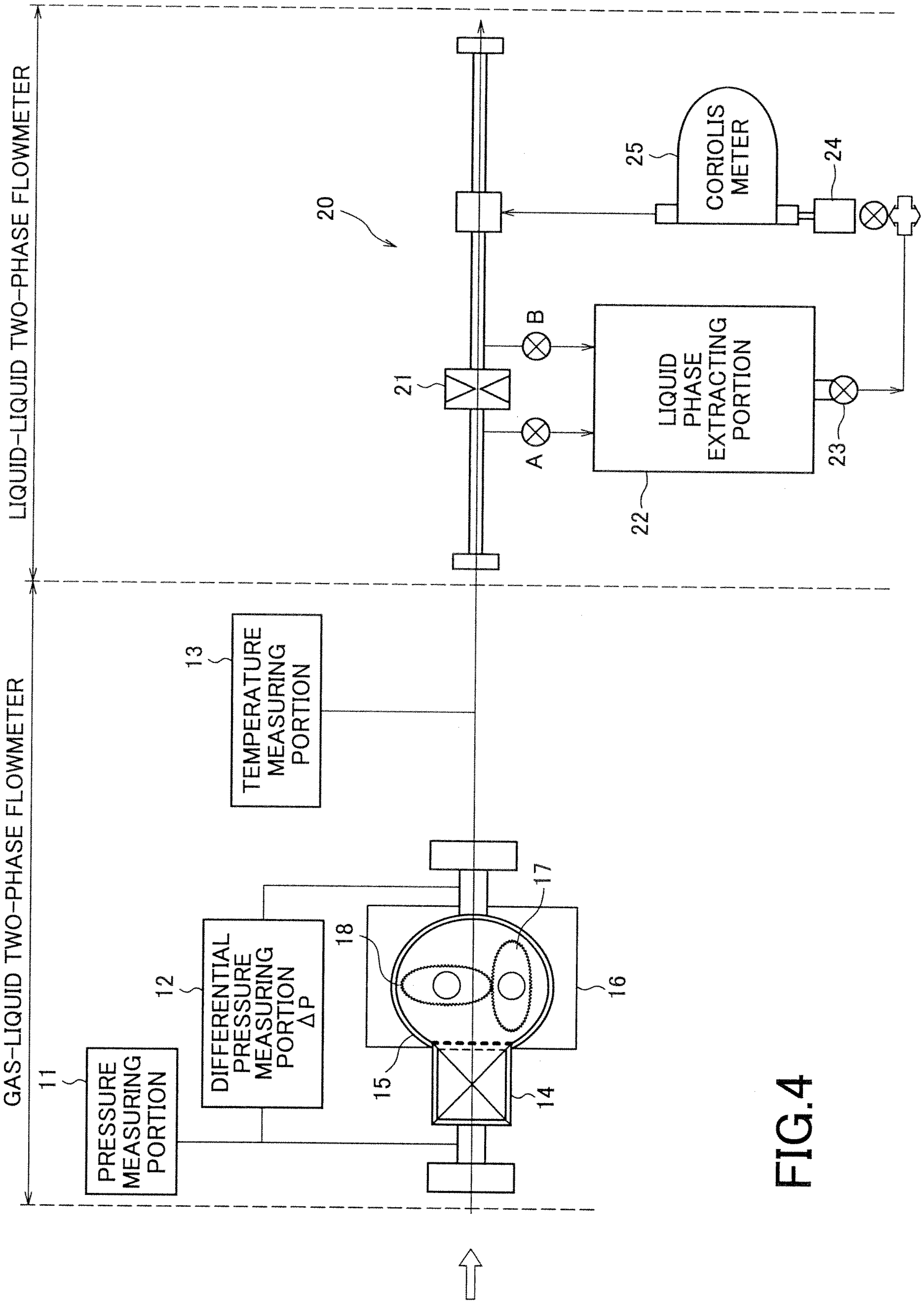
GAS-LIQUID TWO-PHASE FLOWMETER
LIQUID-LIQUID TWO-PHASE FLOWMETER
11
PRESSURE MEASURING PORTION
12
DIFFERENTIAL PRESSURE MEASURING PORTION ΔP
13
TEMPERATURE MEASURING PORTION
14
15
16
17
18
20
21
A
B
22
LIQUID PHASE EXTRACTING PORTION
23
24
25
CORIOLIS METER

FIG.4

FIG.5

(A)

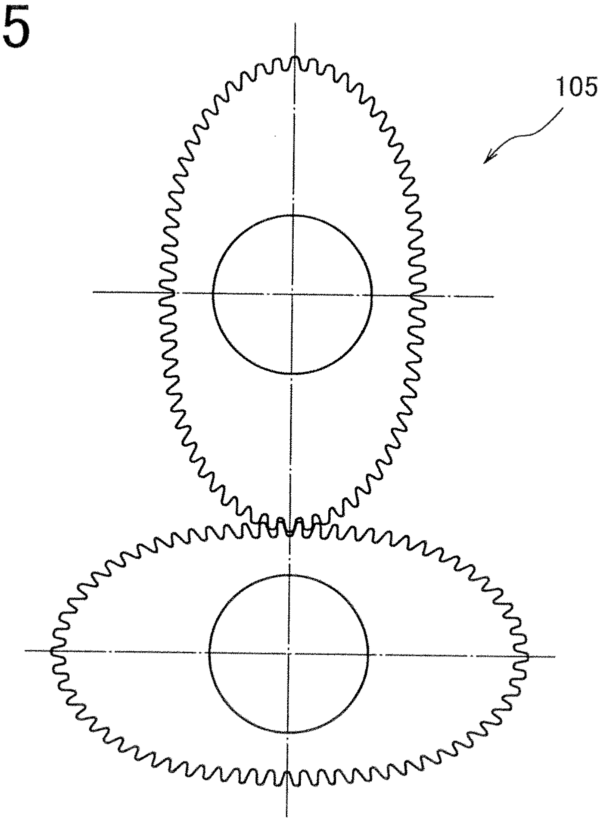


(B)

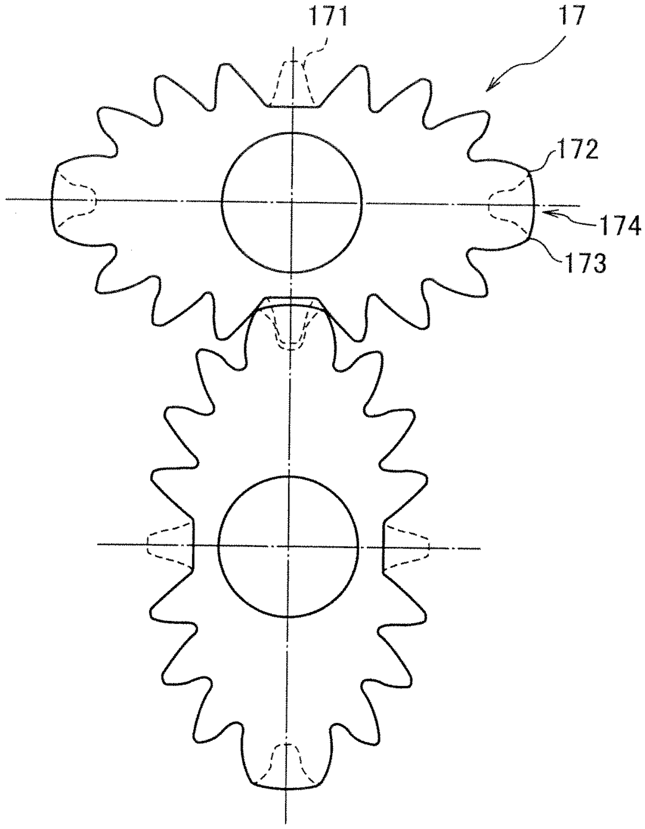

FIG.6

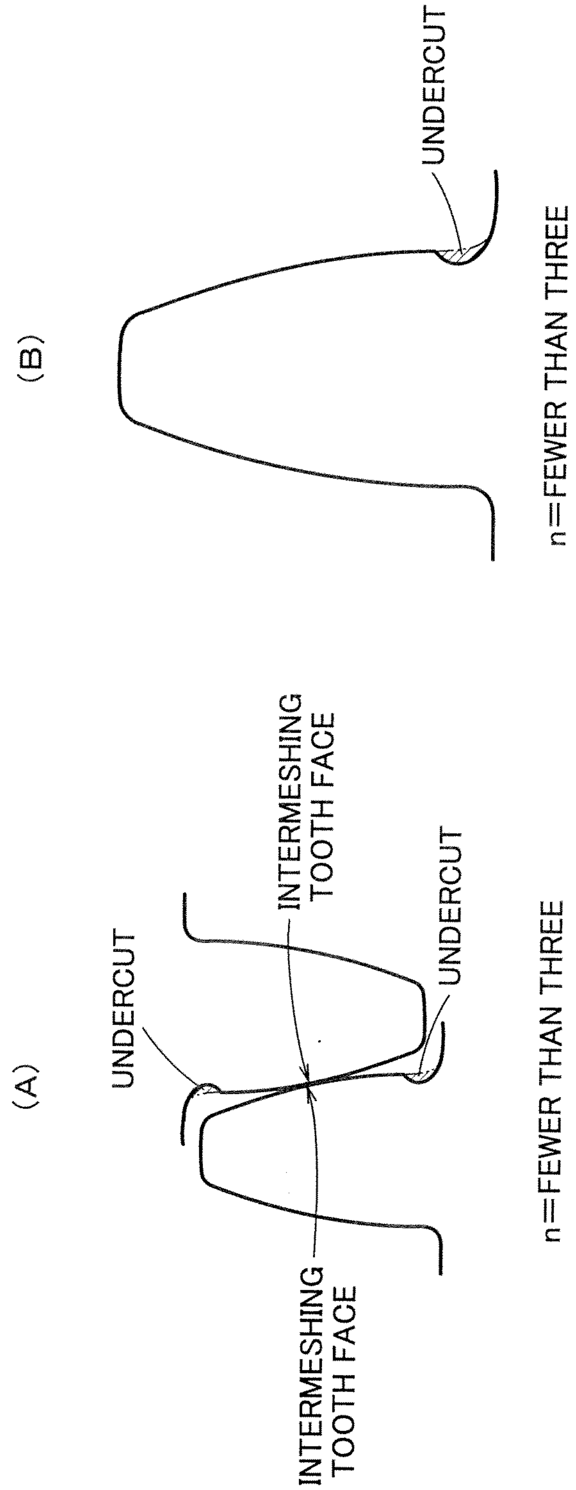
(A)
UNDERCUT
INTERMESHING TOOTH FACE
INTERMESHING TOOTH FACE
UNDERCUT
n=FEWER THAN THREE
(B)
UNDERCUT
n=FEWER THAN THREE

FIG.7

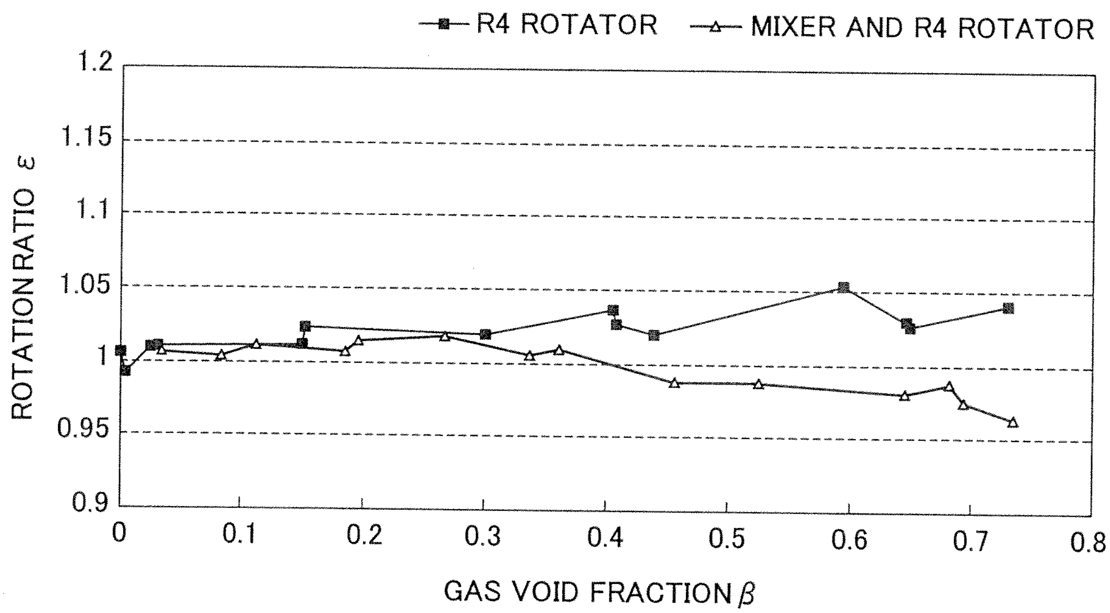
R4 ROTATOR
MIXER AND R4 ROTATOR
1.2
1.15
1.1
1.05
1
0.95
0.9
ROTATION RATIO ε
0
0.1
0.2
0.3
0.4
0.5
0.6
0.7
0.8
GAS VOID FRACTION β

# FIG.8

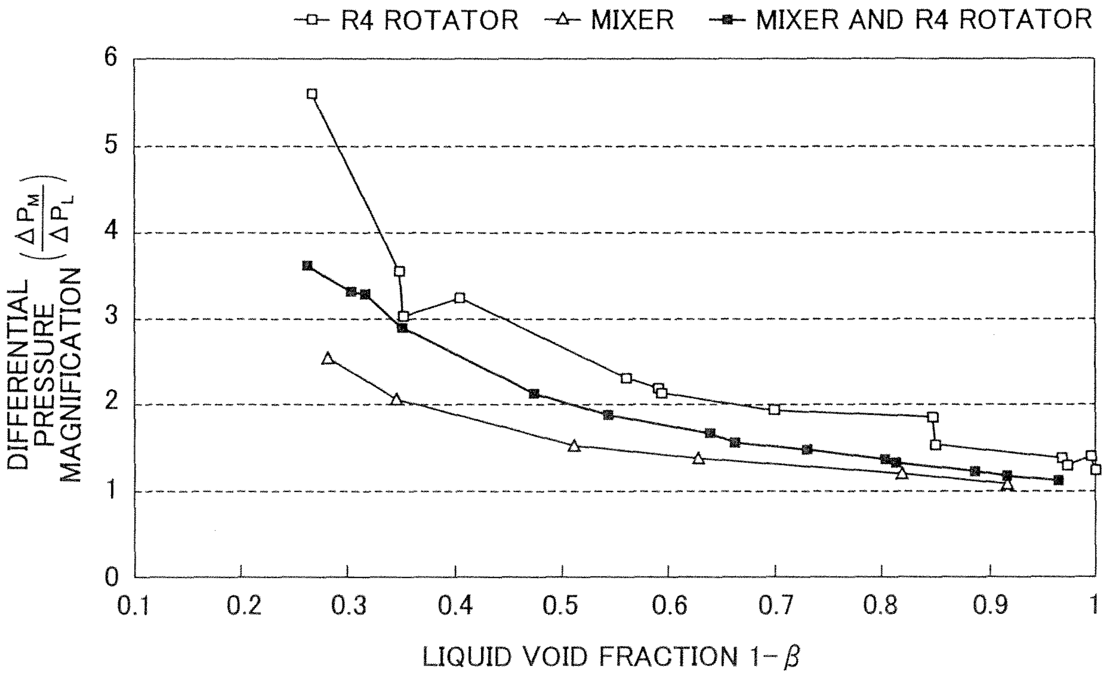
R4 ROTATOR
MIXER
MIXER AND R4 ROTATOR
DIFFERENTIAL PRESSURE MAGNIFICATION $\left(\frac{\Delta P_M}{\Delta P_L}\right)$
6
5
4
3
2
1
0
0.1
0.2
0.3
0.4
0.5
0.6
0.7
0.8
0.9
1
LIQUID VOID FRACTION 1−β

# FIG.9

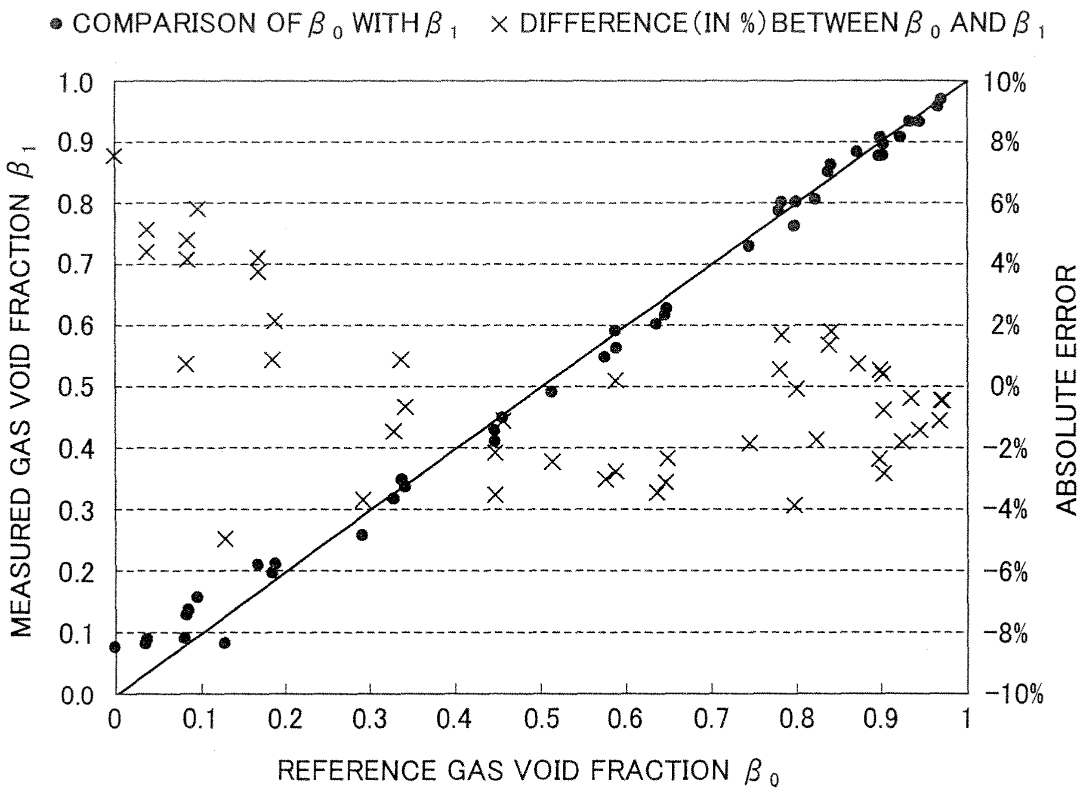
COMPARISON OF $\beta_0$ WITH $\beta_1$
DIFFERENCE (IN %) BETWEEN $\beta_0$ AND $\beta_1$
MEASURED GAS VOID FRACTION $\beta_1$
1.0
0.9
0.8
0.7
0.6
0.5
0.4
0.3
0.2
0.1
0.0
10%
8%
6%
4%
2%
0%
−2%
−4%
−6%
−8%
−10%
ABSOLUTE ERROR
0
0.1
0.2
0.3
0.4
0.5
0.6
0.7
0.8
0.9
1
REFERENCE GAS VOID FRACTION $\beta_0$

# FIG.10

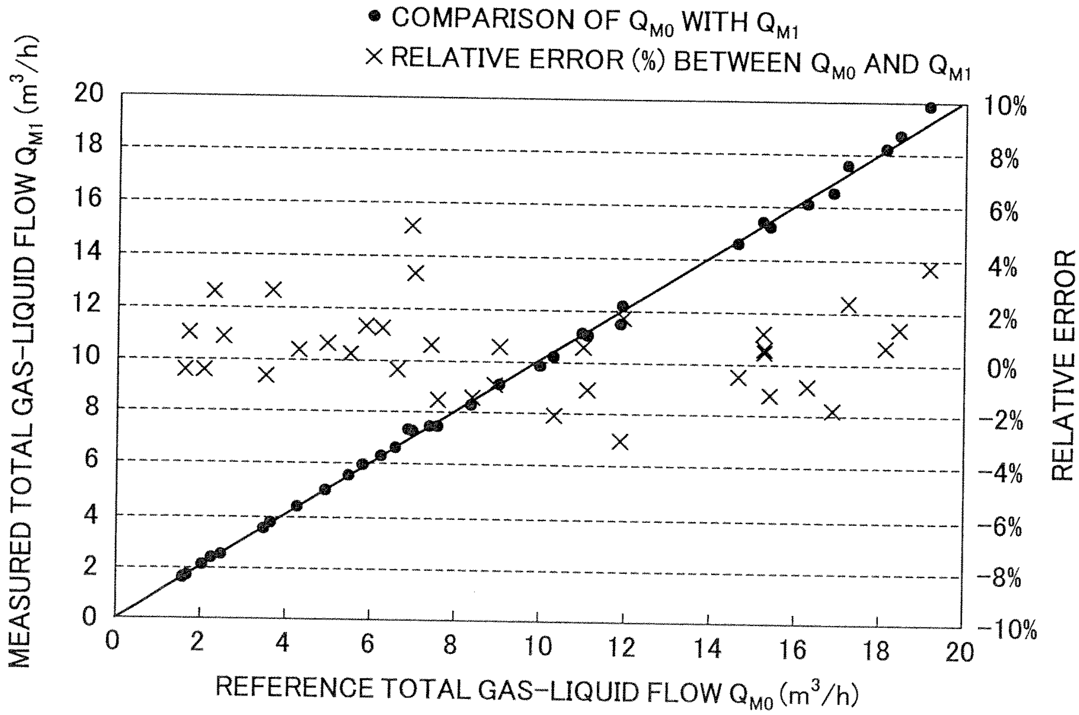
● COMPARISON OF $Q_{M0}$ WITH $Q_{M1}$
× RELATIVE ERROR (%) BETWEEN $Q_{M0}$ AND $Q_{M1}$
MEASURED TOTAL GAS-LIQUID FLOW $Q_{M1}$ ($m^3/h$)
RELATIVE ERROR
REFERENCE TOTAL GAS-LIQUID FLOW $Q_{M0}$ ($m^3/h$)
0
2
4
6
8
10
12
14
16
18
20
10%
8%
6%
4%
2%
0%
−2%
−4%
−6%
−8%
−10%

# FIG.11

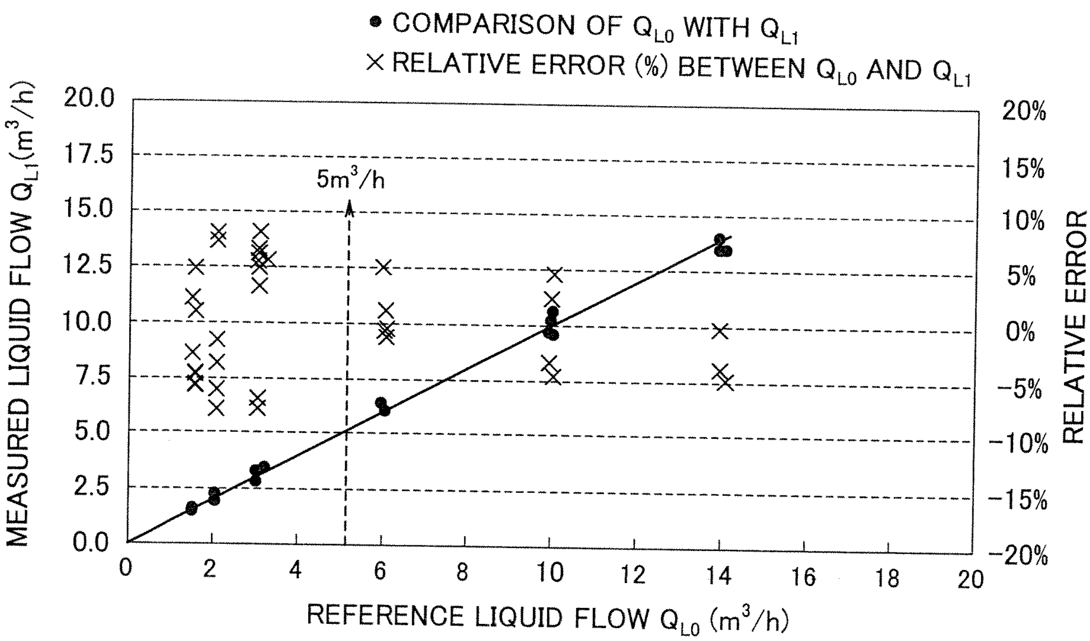
● COMPARISON OF $Q_{L0}$ WITH $Q_{L1}$
× RELATIVE ERROR (%) BETWEEN $Q_{L0}$ AND $Q_{L1}$
MEASURED LIQUID FLOW $Q_{L1}$ ($m^3/h$)
RELATIVE ERROR
REFERENCE LIQUID FLOW $Q_{L0}$ ($m^3/h$)
$5m^3/h$
0.0
2.5
5.0
7.5
10.0
12.5
15.0
17.5
20.0
0
2
4
6
8
10
12
14
16
18
20
20%
15%
10%
5%
0%
−5%
−10%
−15%
−20%

# FIG.12

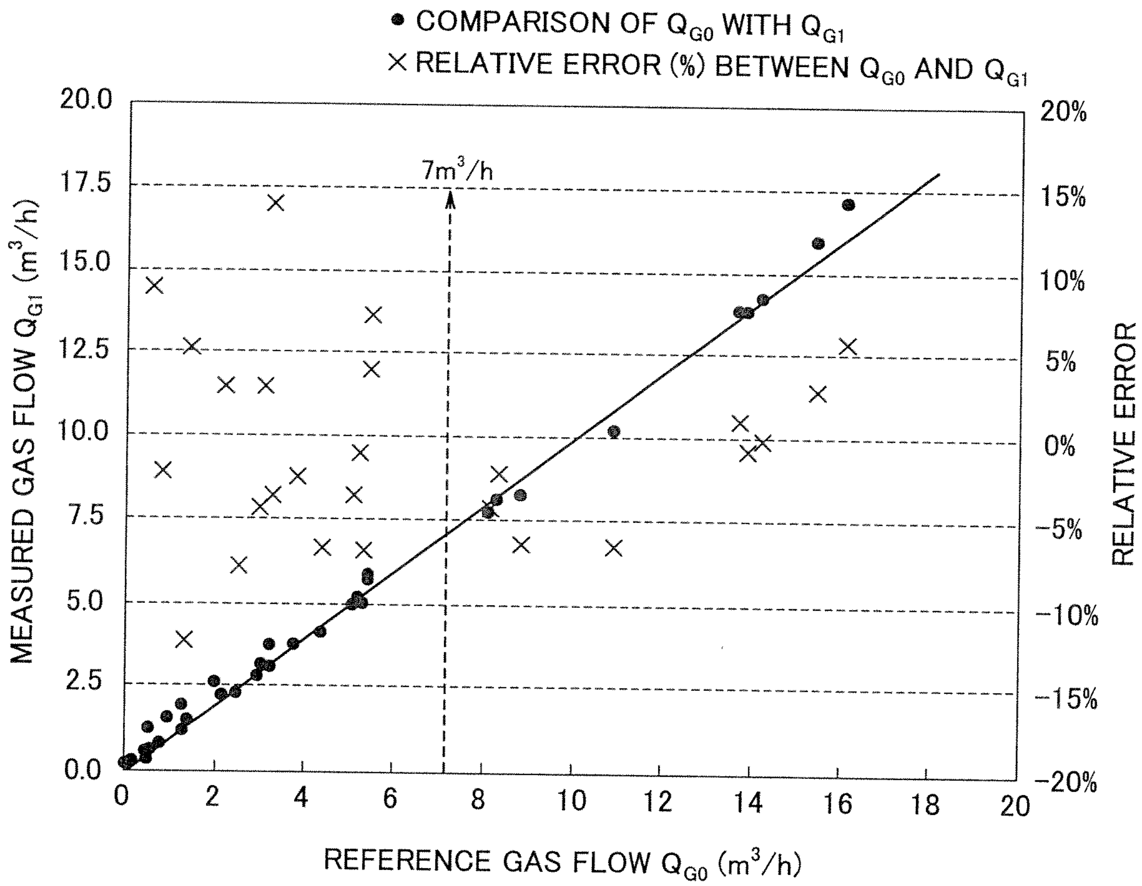
● COMPARISON OF $Q_{G0}$ WITH $Q_{G1}$
× RELATIVE ERROR (%) BETWEEN $Q_{G0}$ AND $Q_{G1}$
7m³/h
MEASURED GAS FLOW $Q_{G1}$ ($m^3/h$)
RELATIVE ERROR
REFERENCE GAS FLOW $Q_{G0}$ ($m^3/h$)
20.0
17.5
15.0
12.5
10.0
7.5
5.0
2.5
0.0
0
2
4
6
8
10
12
14
16
18
20
20%
15%
10%
5%
0%
−5%
−10%
−15%
−20%

FIG.13

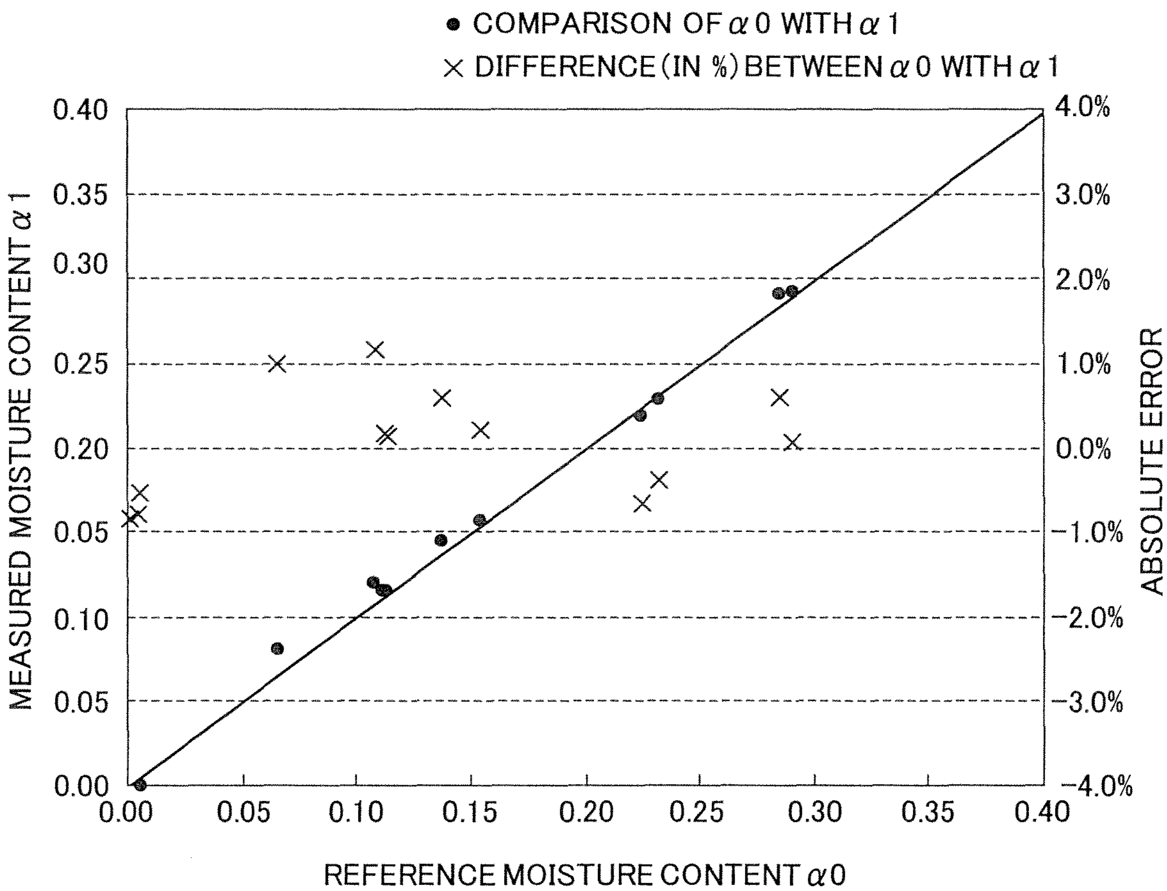
● COMPARISON OF α0 WITH α1
× DIFFERENCE (IN %) BETWEEN α0 WITH α1
MEASURED MOISTURE CONTENT α1
ABSOLUTE ERROR
REFERENCE MOISTURE CONTENT α0
0.40
0.35
0.30
0.25
0.20
0.05
0.10
0.05
0.00
4.0%
3.0%
2.0%
1.0%
0.0%
−1.0%
−2.0%
−3.0%
−4.0%
0.00
0.05
0.10
0.15
0.20
0.25
0.30
0.35
0.40

FIG.14

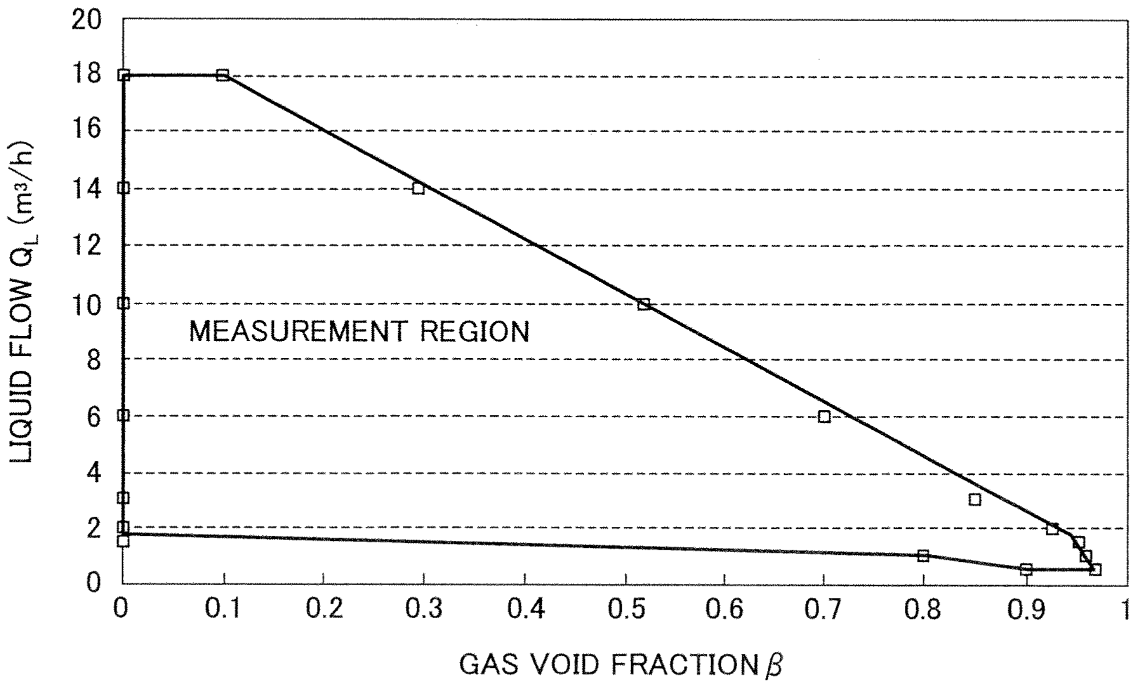
20
18
16
14
12
10
8
6
4
2
0
LIQUID FLOW $Q_L$ (m³/h)
MEASUREMENT REGION
0
0.1
0.2
0.3
0.4
0.5
0.6
0.7
0.8
0.9
1
GAS VOID FRACTION β

FIG.15

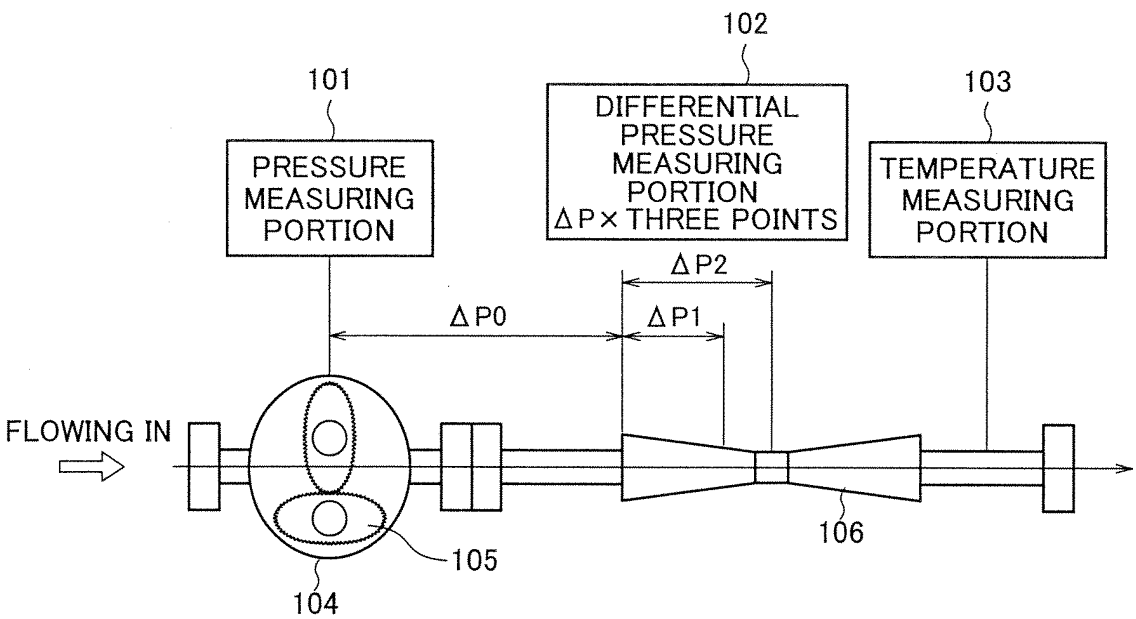
102
101
103
DIFFERENTIAL PRESSURE MEASURING PORTION ΔP× THREE POINTS
PRESSURE MEASURING PORTION
TEMPERATURE MEASURING PORTION
ΔP2
ΔP0
ΔP1
FLOWING IN
105
106
104

FIG.16

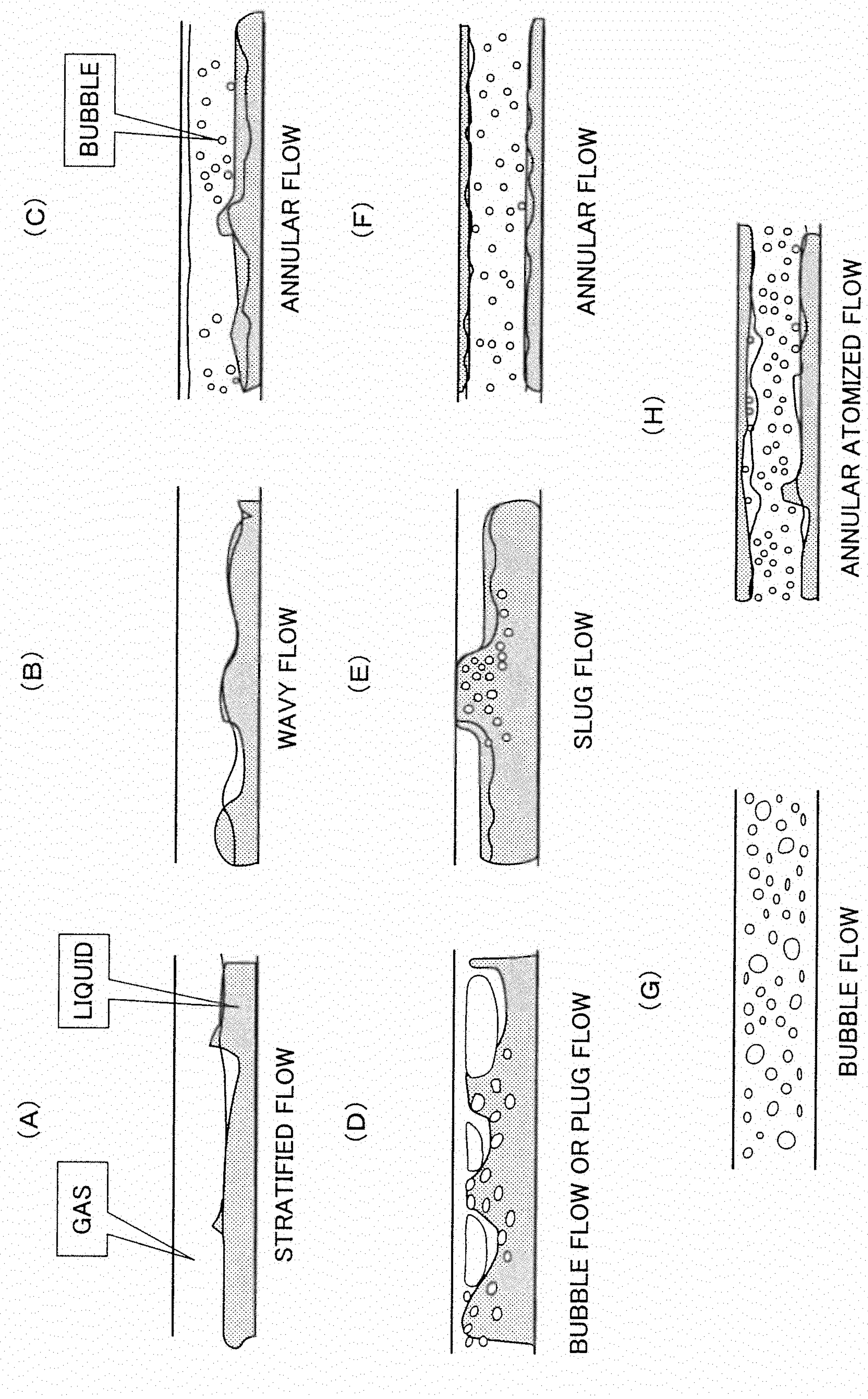
(A)
GAS
LIQUID
STRATIFIED FLOW
(B)
WAVY FLOW
(C)
BUBBLE
ANNULAR FLOW
(D)
BUBBLE FLOW OR PLUG FLOW
(E)
SLUG FLOW
(F)
ANNULAR FLOW
(G)
BUBBLE FLOW
(H)
ANNULAR ATOMIZED FLOW

FIG.17

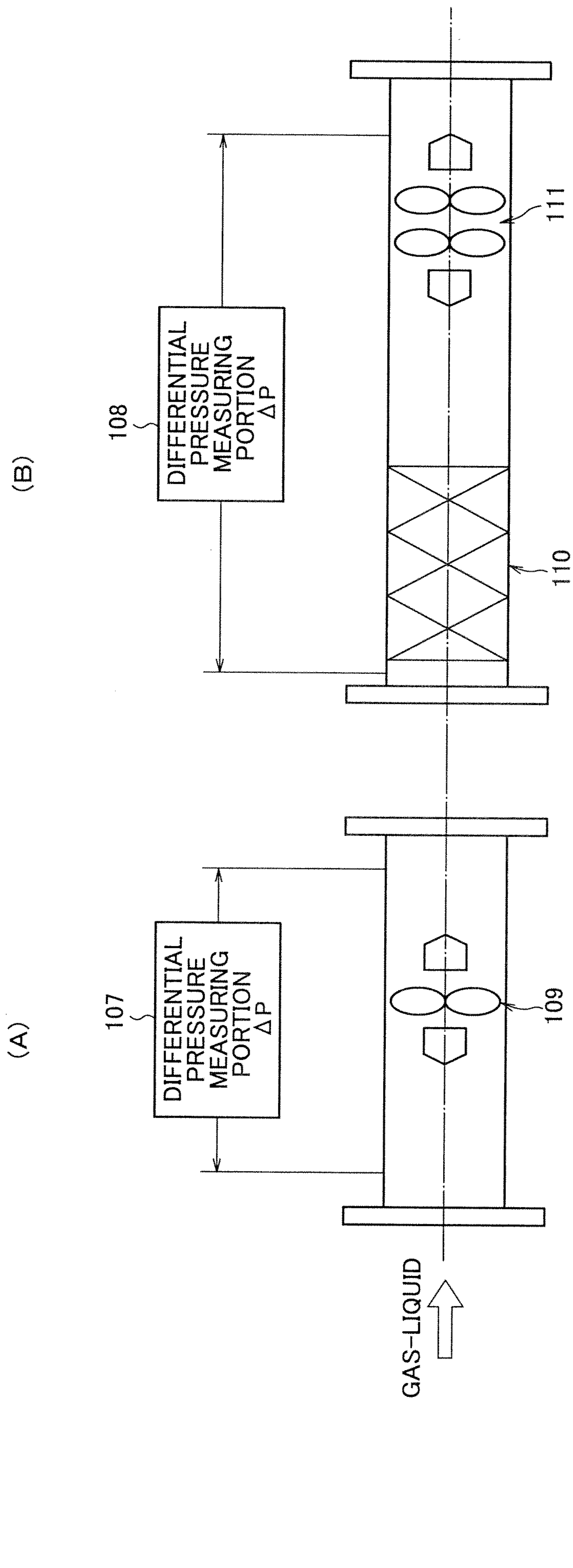
(A)
107
DIFFERENTIAL PRESSURE MEASURING PORTION ΔP
109
GAS-LIQUID
(B)
108
DIFFERENTIAL PRESSURE MEASURING PORTION ΔP
110
111

**INTERNATIONAL SEARCH REPORT**

International application No.
PCT/JP2010/060165

A. CLASSIFICATION OF SUBJECT MATTER
*G01F1/74*(2006.01)i, *G01F3/10*(2006.01)i

According to International Patent Classification (IPC) or to both national classification and IPC

B. FIELDS SEARCHED

Minimum documentation searched (classification system followed by classification symbols)
G01F1/74, G01F3/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2790260 B2 (Agar Corp. Inc.),<br>27 August 1998 (27.08.1998),<br>column 11, lines 32 to 39; fig. 3<br>& US 5461930 A<br>column 3, lines 52 to 63; fig. 3<br>& US 5551305 A & US 36597 E<br>& EP 584329 A & EP 738880 A2<br>& WO 1993/019347 A1 & DE 69318775 C<br>& DE 69332546 D & NO 934151 A<br>& NO 962642 A & AU 6212296 A<br>& AU 3645793 A & CA 2103254 A<br>& HK 1008439 A & RU 2079816 C<br>& AU 678126 B | 1,2,5-10<br>3,4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 July, 2010 (12.07.10) | 20 July, 2010 (20.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/060165

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 3678618 B2 (Japan Oil, Gas and Metals National Corp.),<br>03 August 2005 (03.08.2005),<br>paragraphs [0028] to [0031]; fig. 2<br>(Family: none) | 1,2,5-10<br>3,4 |
| Y<br>A | WO 1995/033980 A1 (ATLANTIC RICHFIELD CO.),<br>14 December 1995 (14.12.1995),<br>page 5, line 22 to page 6, line 11; fig. 1<br>(Family: none) | 1,2,5-10<br>3,4 |
| Y | JP 3827655 B2 (OVAL Corp.),<br>27 September 2006 (27.09.2006),<br>paragraphs [0030] to [0039]; fig. 2<br>& TW 257476 B & KR 10-2005-0001379 A<br>& CN 1573302 A | 6-9 |
| Y | JP 4137153 B2 (OVAL Corp.),<br>20 August 2008 (20.08.2008),<br>paragraphs [0031] to [0033]; fig. 1<br>& US 2009/0199653 A1<br>paragraphs [0042] to [0044]; fig. 1<br>& EP 2077440 A1 & WO 2008/050522 A1<br>& CN 101529215 A | 10 |
| A | JP 2866021 B2 (Japan National Oil Corp.),<br>08 March 1999 (08.03.1999),<br>entire text; all drawings<br>(Family: none) | 1-10 |
| A | JP 10-96656 A (OVAL Corp.),<br>14 April 1998 (14.04.1998),<br>entire text; all drawings<br>(Family: none) | 1-10 |
| A | JP 10-281846 A (OVAL Corp.),<br>23 October 1998 (23.10.1998),<br>entire text; all drawings<br>(Family: none) | 1-10 |
| A | US 5501099 A (ITT CORP.),<br>26 March 1996 (26.03.1996),<br>entire text; all drawings<br>& CA 2151026 A | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2790260 B
- JP 2866021 B
- JP 3678618 B
- JP 4137153 B
- JP 382765 A
- JP 3827655 B